# EUROPÄISCHE PATENTSCHRIFT

(11) **EP 4 198 427 B1**
(45) Veröffentlichungstag und Bekanntmachung des Hinweises auf die Patenterteilung: **23.09.2026**
(21) Anmeldenummer: 22208710.8
(22) Anmeldetag: 22.11.2022
(51) Int. Cl.: F25D 29/00, G01J 1/04, G01J 1/42, F25D 27/00

(54) **HAUSHALTSGERÄT MIT EINER UMGEBUNGSLICHTERFASSUNGSEINHEIT UND VERFAHREN**
HOUSEHOLD APPLIANCE HAVING AN AMBIENT LIGHT SENSING UNIT AND METHOD
APPAREIL MÉNAGER DOTÉ D'UNE UNITÉ DE DÉTECTION DE LUMIÈRE AMBIANTE ET PROCÉDÉ

(30) Priorität: 20.12.2021 DE 102021214674; 20.12.2021 DE 102021214672; 20.12.2021 DE 102021214671; 20.12.2021 DE 102021214673
(43) Veröffentlichungstag der Anmeldung: 21.06.2023
(73) Patentinhaber: BSH Hausgeräte GmbH, 81739 München (DE)
(72) Erfinder: Schimmele, Martin, 73485 Unterschneidheim (DE); Weber, Armin, 73466 Lauchheim (DE)

(56) Entgegenhaltungen:
- WO-A1-03/010474
- WO-A1-2011/040026
- WO-A1-2019/194508
- CN-A- 102 213 535
- CN-A- 113 494 810
- CN-U- 208 109 686
- DE-A1- 102004 021 858
- DE-A1- 102013 220 630
- DE-A1- 102014 205 727
- JP-A- 2006 342 996
- KR-A- 19990 079 760

## Beschreibung

Ein Aspekt der Erfindung betrifft ein Haushaltsgerät mit einer Umgebungslichterfassungseinheit und ein Verfahren zur spezifischen Helligkeitseinstellung einer Beleuchtungsvorrichtung für ein Haushaltskältegerät. Die Umgebungslichterfassungseinheit weist ein Sensorgehäuse und einen Helligkeitssensor auf, der die Helligkeit des Umgebungslichts des Haushaltsgeräts detektiert. Der Helligkeitssensor ist in dem Sensorgehäuse angeordnet.

Aus der US 6804974 B1 ist ein Beleuchten eines Innenraums eines Haushaltskältegeräts bekannt. Diese Innenraumbeleuchtung kann auf verschiedene Helligkeitsstufen in Abhängigkeit der Umgebungshelligkeit des Haushaltskältegeräts eingestellt werden.

WO 2011/040026 A1 offenbart ein Kältegerät, bei dem auf einer Türoberfläche eine Beleuchtungsstärkeerfassungseinrichtung wie ein Lichtsensor zur Erfassung der Umgebungshelligkeit installiert ist.

WO 03/010474 A1 offenbart ein Kältegerät mit einer Innenraumbeleuchtung (6), wobei eine Steuerschaltung (3) zum Steuern der Leistung der Innenraumbeleuchtung (6) in Abhängigkeit von einem von einem lichtempfindlichen Element (4) erfassten Helligkeitswert vorgesehen ist.

CN 113 494 810 A offenbart ein Verfahren für ein Kältegerät, wobei beim Öffnen eines Lagerfachs die Lichtintensität durch einen Lichtsensor erfasst wird, dann eine Lichtquelle allmählich aufleuchtet und dann allmählich wieder verdunkelt.

DE 10 2013 220630 A1 offenbart ein Haushaltskältegerät, das eingerichtet ist, die Helligkeit des von einem Leuchtmittel erzeugten Lichts abhängig vom Öffnungswinkel eines Türblatts einzustellen.

CN 102 213 535 A offenbart ein Kältegerät mit einem Beleuchtungssensor zum Einstellen der Helligkeit einer Innenraumbeleuchtung in Abhängigkeit der Umgebungshelligkeit und eine Türöffnungserkennungseinheit zum Auslösen der Innenraumbeleuchtung.

Das Dokument DE 10 2004 021858 A1 offenbart ein Haushaltsgerät gemäß der Präambel des Anspruchs 1.

Es ist Aufgabe der vorliegenden Erfindung, ein Haushaltsgerät zu schaffen, bei welchem eine Umgebungslichterfassungseinheit bedarfsgerechter angeordnet werden kann. Ferner ist ein Verfahren für ein Haushaltsgerät angegeben, bei welchem der Betrieb, insbesondere der Beleuchtungsvorrichtung, verbessert ist.

Diese Aufgabe wird durch ein Haushaltsgerät gemäß dem Anspruch 1 gelöst
Ein Aspekt der Erfindung betrifft ein Haushaltsgerät mit einer Umgebungslichterfassungseinheit. Die Umgebungslichterfassungseinheit weist ein Sensorgehäuse und einen Helligkeitssensor auf. Der Helligkeitssensor detektiert die Helligkeit des Umgebungslichts des Haushaltsgeräts. Der Helligkeitssensor ist in dem Sensorgehäuse angeordnet. Das Haushaltsgerät weist ein Gehäuse mit einer Frontleiste und eine an dem Gehäuse angebundene Tür auf. Die Umgebungslichterfassungseinheit ist an der Frontleiste oder einer Türabschlussleiste, insbesondere direkt rückseitig, der Tür angeordnet. Dadurch ist diese Umgebungslichterfassungseinheit platzsparend und geschützt vor mechanischen oder anderweitigen Einflüssen positioniert. Darüber hinaus nutzt sie einen vorzugsweise ohnehin vorhandenen Bauraum im Haushaltsgerät, um auch dort verbaut werden zu können. Dadurch müssen andere Bereiche des Haushaltsgeräts nicht reduziert oder umkonstruiert werden.

Erfindungsgemäß weist die Frontleiste oder die Türabschlussleiste ein Loch auf, durch welches die Umgebungslichterfassungseinheit das einfallende Umgebungslicht detektiert. Der Rest der Umgebungslichterfassungseinheit ist dann durch die Frontleiste oder Türabschlussleiste bedeckt und auch geschützt angeordnet. Dennoch kann durch dieses Loch hindurch ausreichend Umgebungslicht in das Sensorgehäuse beziehungsweise auf die Linse einfallen.

Erfindungsgemäß weist das Haushaltsgerät zumindest eine Tür auf, durch welche das Loch im geschlossenen Zustand der Tür zumindest abgeschattet ist, sodass Umgebungslicht allenfalls reduziert zum Loch gelangt. Damit sind bei geschlossener Tür die Detektion des Umgebungslichts und somit auch die Auswertung der Helligkeit des Umgebungslichts nur eingeschränkt oder unzureichend ermöglicht. Dies ist insbesondere wichtig, da das Haushaltsgerät ein Einbaugerät ist und an einer Frontseite eines Türblatts der Tür eine separate Designplatte angeordnet ist. Eine derartige Designplatte kann beispielsweise eine Möbelfrontplatte sein. In Höhenrichtung des Haushaltsgeräts betrachtet ist das Loch in der Frontseite überlappend mit der Designplatte angeordnet. In Tiefenrichtung des Haushaltsgeräts ist maximal ein minimaler Abstand zwischen dem Loch und der Designplatte gebildet, sodass das Loch durch die Designplatte zumindest für das Umgebungslicht abgeschattet ist. Gerade bei Einbaugeräten oder Geräten, die mit der geschlossenen Tür eine zwar nicht gegebenenfalls vollständige Abdeckung des Lochs in der Frontleiste vollziehen, jedoch so nahe dazu angeordnet sind, dass eine Abschattung des Umgebungslichts auftritt, ist dennoch dies eine vorteilhafte Verbauposition. Denn es kann platzsparend die Umgebungslichterfassungseinheit verbaut werden und dennoch dann bei zumindest teilweise geöffneter Tür und dann nicht mehr abgeschatteten Loch in der Frontleiste die Umgebungshelligkeit sehr genau detektiert werden. Obwohl erfindungsgemäß bei geschlossener Tür aufgrund der zumindest ausgebildeten Abschattung die Umgebungshelligkeit nicht oder nicht ausreichend erfasst werden kann, ist die oben genannte Verbauposition vorteilhaft. Denn es kann beispielsweise oberhalb eines Aufnahmeraums ein vorhandener Freiraum im Gehäuse genutzt werden, in dem auch anderweitige Elektronikkomponenten angeordnet sind. Dieser Platz wird dann auch zusätzlich durch die Umgebungslichterfassungseinheit belegt. Damit kann das Volumen des Aufnahmeraums beibehalten werden und dieser Bereich für die Elektronikkomponenten, insbesondere oberhalb des Aufnahmeraums, kann zusätzlich genutzt werden, um auch darin die Umgebungslichterfassungseinheit zu positionieren. Dies hat entsprechende Vorteile bezüglich der Vermeidung von Umkonstruktionen anderweitiger Bereiche des Haushaltsgeräts, insbesondere des Haushaltskältegeräts. Dennoch ist die Konzeption dahingehend, dass bei geöffneter Tür die Umgebungshelligkeit sehr präzise detektiert werden kann. Dies reicht insbesondere aus, um auch sehr schnell und bedarfsgerecht eine Anpassung der Beleuchtungsvorrichtung an die erfasste Umgebungshelligkeit durchführen zu können, ohne dass ein unerwünschtes Blenden oder ein zu schwaches Ausleuchten des Innenraums, je nach Umgebungshelligkeit, auftreten würde.

Die Umgebungslichterfassungseinheit ist mit zumindest einer Schnappverbindung an der Frontleiste oder Türabschlussleiste angeordnet. Eine derartige lösbare Verbindung ist einerseits mechanisch stabil, andererseits sehr einfach lösbar und wieder erzeugbar. Ein reversibles Montieren und Demontieren ist dadurch einfach ermöglicht.

Insbesondere ist die oben genannte Frontleiste eine in Höhenrichtung des Haushaltsgeräts betrachtet obere Frontleiste. Insbesondere ist die oben genannte Türabschlussleiste eine in Höhenrichtung der Tür betrachtet obere Türabschlussleiste.

Das Sensorgehäuse ist in einem Ausführungsbeispiel mehrteilig ausgebildet. es weist ein frontseitiges Sensorgehäuseteil und ein rückseitiges Sensorgehäuseteil auf, welche miteinander über eine Schnapp-Rast-Verbindung verbunden sind.

Die Umgebungslichterfassungseinheit weist in einem Ausführungsbeispiel zumindest ein optisches Abbildungselement, insbesondere eine Linse auf, mit welcher das auf das Sensorgehäuse einfallende Umgebungslicht zum Helligkeitssensor hin gebündelt ist. Durch ein derartiges Ausführungsbeispiel einer Umgebungslichterfassungseinheit kann das Umgebungslicht umfänglicher und genauer auf den Helligkeitssensor im Inneren des Sensorgehäuses geleitet werden. Dadurch kann die Genauigkeit der Bestimmung der Helligkeit des Umgebungslichts verbessert, insbesondere präzisiert, werden. Indem hier explizit eine das Licht bündelnde Linse genutzt wird und somit eine Sammellinse, die insbesondere zumindest einseitig konvex ausgebildet ist, genutzt wird, kann die Fokussierung des Umgebungslichts auf den Helligkeitssensor erfolgen.

In einem Ausführungsbeispiel ist die Linse eine zumindest einseitig konvex geformte Linse. Sie kann sphärisch oder asphärisch sein. Ein besonders hoher Lichtanteil des einfallenden Umgebungslichts kann damit gezielt und gerichtet zu dem Helligkeitssensor gelenkt werden.

In einem Ausführungsbeispiel ist der Helligkeitssensor in einem Fokus der Linse angeordnet. Dadurch ist das Umgebungslicht, welches in das Sensorgehäuse einfällt, besonders lokal am Helligkeitssensor ankommend.

In einem Ausführungsbeispiel kann die Linse als separate Komponente zum Sensorgehäuse ausgebildet sein. Sie kann dann auch direkt an dem Sensorgehäuse angeordnet sein. Insbesondere kann das Sensorgehäuse dazu ein Loch aufweisen, in dem oder benachbart zu dem die Linse angeordnet ist.

In einem vorteilhaften Ausführungsbeispiel ist die Linse einstückig mit dem Sensorgehäuse ausgebildet. Damit kann die Bauteilzahl reduziert werden. Eine besonders positionsgenaue Anordnung der Linse zum Sensorgehäuse ist dadurch ermöglicht. Diese Position kann auch dauerhaft aufrecht erhalten werden. Eine einstückige Ausgestaltung ermöglicht auch einen einfachen Herstellungsprozess. Beispielsweise kann hier ein Spritzgussbauteil realisiert sein. Möglich ist auch, dass dieses Bauteil ein 2K-Bauteil ist. Damit können beispielsweise das Sensorgehäuse und die Linse aus unterschiedlichen Materialien geformt, insbesondere durch Spritzgießen, hergestellt werden.

Möglich ist es auch, dass das Sensorgehäuse zumindest bereichsweise transparent ist. Dies bedeutet, dass es dann zumindest bereichsweise für Licht im für den Menschen sichtbaren Spektralbereich durchlässig ist. Insbesondere kann das Sensorgehäuse an der Stelle, an der die Linse angeordnet ist, transparent sein.

In einem Ausführungsbeispiel ist die Linse mit zumindest einer Außenseite zur Umgebung hin freiliegend am Sensorgehäuse angeordnet. Dadurch erfolgt der Lichteinfall aus der Umgebung direkt auf die Außenseite der Linse. Umfängliche anderweitige Lichtwege, die das Umgebungslicht zunächst zurücklegen muss, insbesondere auch im Sensorgehäuse, um zu dieser Linse gelangen zu können und dort gebündelt zu werden, können dadurch entfallen. Damit ist auch ein kurzer Weg von der Linse zum Helligkeitssensor im Sensorgehäuse ermöglicht. Unerwünschte Lichtverluste des Umgebungslichts, welches auf das Sensorgehäuse einfällt, können dadurch vermieden werden.

In einem Ausführungsbeispiel weist die Umgebungslichterfassungseinheit einen zu einer Linse unterschiedlichen Lichtleiter auf. Mit diesem wird bestimmungsgemäß das in das Sensorgehäuse einfallende Licht geleitet. Es kann insbesondere zu dem Helligkeitssensor geleitet werden.

In einem Ausführungsbeispiel sind die Linse und der Lichtleiter miteinander gekoppelt.

Insbesondere ist die Linse im Strahlengang des einfallenden Umgebungslichts vor dem Lichtleiter angeordnet. Damit ist es ermöglicht, dass einerseits das Licht gebündelt wird, andererseits durch den Lichtleiter auch gezielt zu dem Helligkeitssensor gelangt. Die Lichtverluste auch im Sensorgehäuse können dadurch nochmals reduziert werden. Ein besonders hoher Anteil des einfallenden Umgebungslichts wird dann sehr gerichtet und definiert zu dem Helligkeitssensor geleitet.

In einem Ausführungsbeispiel ist die Linse als ein Ende des Lichtleiters ausgebildet. Sie ist insbesondere einstückig mit dem Lichtleiter ausgebildet. Durch eine derartige integrierte Ausgestaltung des Lichtleiters mit der Linse kann wiederum die Bauteilzahl reduziert werden und eine besonders exakte Lenkung und Führung des einfallenden Umgebungslichts zu dem Helligkeitssensor hin ermöglicht werden.

Insbesondere ist die Linse mit dem Lichtleiter einstückig hergestellt. Beispielsweise kann dies ein einstückiges Kunststoffbauteil sein.

In einem Ausführungsbeispiel weist die Umgebungslichterfassungseinheit eine Platine auf. Auf dieser Platine ist der Helligkeitssensor angeordnet. Es kann in einem Ausführungsbeispiel vorgesehen sein, dass auf dieser Platine zusätzlich auch ein Feuchtigkeitssensor angeordnet ist. Damit kann die eine Platine zur Aufnahme von mehreren unterschiedlichen Sensoren genutzt werden.

Das Haushaltsgerät kann insbesondere ein Haushaltskältegerät sein. Diesbezüglich kann es zum Lagern und Konservieren von Lebensmitteln bestimmungsgemäß vorgesehen sein. Das Haushaltskältegerät kann beispielsweise ein Kühlgerät oder ein Gefriergerät sein.

Das Haushaltsgerät weist ein Gehäuse auf. In diesem Gehäuse ist zumindest ein Aufnahmeraum für Lebensmittel ausgebildet. Dieser Aufnahmeraum kann ein Kühlfach oder ein Gefrierfach sein. Das Haushaltsgerät weist in einem Ausführungsbeispiel zumindest eine Tür auf, mit welcher der Aufnahmeraum frontseitig verschließbar ist. Die Tür kann bewegbar an dem Gehäuse angeordnet sein. Besonders vorteilhaft ist ein Haushaltsgerät mit einer Umgebungslichterfassungseinheit dann, wenn dieser Aufnahmeraum durch eine Beleuchtungsvorrichtung beziehungsweise Aufnahmeraumbeleuchtung des Haushaltsgeräts zumindest bei geöffneter Tür beleuchtet werden soll. Da ein Haushaltsgerät in unterschiedlichsten Umgebungsbedingungen aufgestellt sein kann, können auch sehr vielfältige und unterschiedliche Helligkeiten am Aufstellort auftreten. So kann dies beispielsweise in sehr dunklen Zimmern oder unter sehr dunklen Umgebungsbedingungen dazu führen, dass ein Nutzer, der die Tür öffnet und in den Aufnahmeraum blickt, gegebenenfalls geblendet wird, wenn die Beleuchtungsvorrichtung beziehungsweise Aufnahmeraumbeleuchtung zu hell ist. Andererseits kann bei anderweitigen Umgebungsbedingungen die Beleuchtungsvorrichtung zu dunkel oder nicht ausreichend sein beziehungsweise ein ausreichender Kontrast zur Umgebungshelligkeit nicht gegeben sein. Um all diesen sehr unterschiedlichen Aufstellbedingungen und damit einhergehenden sehr unterschiedlichen Umgebungshelligkeitsbedingungen gerecht werden zu können, um auch abhängig davon bedarfsgerecht die Beleuchtungsvorrichtung einzustellen, ist die oben genannte Erfindung besonders vorteilhaft. Denn es ist damit die besonders exakte Bestimmung der Umgebungshelligkeit ermöglicht. Davon abhängig kann dann wiederum sehr bedarfsgerecht die Beleuchtungsvorrichtung des Haushaltsgeräts eingestellt werden. Bei dem Öffnen der Tür oder geöffneter Tür und einer aktivierten Beleuchtungsvorrichtung kann dann dieser Aufnahmeraum sehr bedarfsgerecht und abhängig von dieser detektierten Umgebungshelligkeit ausgeleuchtet werden.

Das Haushaltsgerät weist ein Gehäuse auf. Das Haushaltsgerät weist eine Frontleiste auf. Diese ist an dem Gehäuse angeordnet. Sie ist diesbezüglich frontseitig an dem Gehäuse angeordnet. Die Umgebungslichterfassungseinheit ist an der Frontleiste insbesondere direkt rückseitig, angeordnet. Sie kann mit einer lösbaren mechanischen Verbindung an der Frontleiste rückseitig angeordnet sein. Beispielsweise kann eine derartige lösbare mechanische Verbindung zumindest eine Schnappverbindung sein. Damit ist ein besonders vorteilhafter Verbau dieses Sensorgehäuses erreicht. Einerseits ist eine mechanisch stabile Befestigung ermöglicht, andererseits eine verdeckte Bauweise ermöglicht. Nach vorne hin liegt somit dieses Sensorgehäuse nicht frei. Dennoch ist es dann ermöglicht, dass das auf die Frontleiste frontseitig einfallende Umgebungslicht zu dem Helligkeitssensor gelangt.

Die Frontleiste kann eine horizontal orientierte oder eine vertikal orientierte Frontleiste sein. Sie kann auch eine Traverse sein. Diese kann balkenartig gebildet sein. Die Frontleiste kann mit thermischer Isolierung, insbesondere Isolationsschaum, rückseitig bedeckt sein oder frei davon sein.

Das Haushaltsgerät weist eine Tür auf. Die Tür umfasst eine Innenseite und Außenseite zwischen denen vorzugsweise eine thermische Isolationsschicht, insbesondere Isolationsschaum, vorgesehen ist. Die Tür kann schwenkbar am Gehäuse beispielsweise bezüglich einer vertikal verlaufenden Schwenkachse gelagert sein, einer sogenannten Schwenktür. Die Tür kann auch eine über Teleskopschienen linear geführte Schubladentür sein. Ferner weist die Tür eine Türabschlussleiste auf, welche in Höhenrichtung des Haushaltsgeräts üblicherweise an einer oberen oder unteren Kante der Tür zum Abdichten vorgesehen ist. Die Umgebungslichterfassungseinheit ist in einem Ausführungsbeispiel an einer oberen oder unteren Türabschlussleiste, insbesondere direkt rückseitig bzw. an der inneren Oberfläche der oberen Türabschlussleiste, angeordnet. Sie kann mit einer lösbaren mechanischen Verbindung an der Türabschlussleiste rückseitig bzw. an der inneren bzw. isolationsseitigen Oberfläche angeordnet sein. Die Türabschlussleiste erstreckt sich mit seiner Längsseite in Breitenrichtung des Haushaltsgeräts und ist üblicherweise mit seiner äußeren Hauptfläche nach oben gewandt. Beispielsweise kann eine derartige lösbare mechanische Verbindung zumindest eine Schnappverbindung sein. Damit ist ein besonders vorteilhafter Verbau dieses Sensorgehäuses erreicht. Einerseits ist eine mechanisch stabile Befestigung ermöglicht, andererseits eine verdeckte Bauweise ermöglicht. Nach außen hin liegt somit dieses Sensorgehäuse weitestgehend verborgen, dennoch ist es dann möglich, dass das auf die äußere Oberfläche der Türabschlussleiste frontseitig einfallende Umgebungslicht zu dem Helligkeitssensor gelangt.

In einem Ausführungsbeispiel weist das Haushaltsgerät zumindest eine Tür auf, durch welche das Loch im geschlossenen Zustand der Tür zumindest abgeschattet ist, sodass Umgebungslicht allenfalls reduziert zum Loch gelangt. Damit sind bei geschlossener Tür bei diesem Ausführungsbeispiel die Detektion des Umgebungslichts und somit auch die Auswertung der Helligkeit des Umgebungslichts nur eingeschränkt oder unzureichend ermöglicht. Dies ist insbesondere dann der Fall, wenn das Haushaltsgerät ein Einbaugerät ist und an einer Frontseite eines Türblatts der Tür eine separate Designplatte angeordnet ist. Eine derartige Designplatte kann beispielsweise eine Möbelfrontplatte sein. In Höhenrichtung des Haushaltsgeräts betrachtet ist das Loch in der Frontseite überlappend mit der Designplatte angeordnet. In Tiefenrichtung des Haushaltsgeräts ist maximal ein minimaler Abstand zwischen dem Loch und der Designplatte gebildet, sodass das Loch durch die Designplatte zumindest für das Umgebungslicht abgeschattet ist. Gerade bei Einbaugeräten oder Geräten, die mit der geschlossenen Tür eine zwar nicht gegebenenfalls vollständige Abdeckung des Lochs in der Frontleiste vollziehen, jedoch so nahe dazu angeordnet sind, dass eine Abschattung des Umgebungslichts auftritt, ist dennoch dies eine vorteilhafte Verbauposition. Denn es kann platzsparend die Umgebungslichterfassungseinheit verbaut werden und dennoch dann bei zumindest teilweise geöffneter Tür und dann nicht mehr abgeschatteten Loch in der Frontleiste die Umgebungshelligkeit sehr genau detektiert werden. Obwohl in einem Ausführungsbeispiel dann bei geschlossener Tür aufgrund der zumindest ausgebildeten Abschattung die Umgebungshelligkeit nicht oder nicht ausreichend erfasst werden kann, ist die oben genannte Verbauposition vorteilhaft. Denn es kann beispielsweise oberhalb eines Aufnahmeraums ein vorhandener Freiraum im Gehäuse genutzt werden, in dem auch anderweitige Elektronikkomponenten angeordnet sind. Dieser Platz wird dann auch zusätzlich durch die Umgebungslichterfassungseinheit belegt. Damit kann das Volumen des Aufnahmeraums beibehalten werden und dieser Bereich für die Elektronikkomponenten, insbesondere oberhalb des Aufnahmeraums, kann zusätzlich genutzt werden, um auch darin die Umgebungslichterfassungseinheit zu positionieren. Dies hat entsprechende Vorteile bezüglich der Vermeidung von Umkonstruktionen anderweitiger Bereiche des Haushaltsgeräts, insbesondere des Haushaltskältegeräts.

In einem Ausführungsbeispiel weist das Haushaltgerät zwei separate Türen auf, die in Breitenrichtung des Haushaltsgeräts nebeneinander angeordnet sind, wobei insbesondere das Loch, insbesondere mittig, zwischen den beiden Türen an der Frontleiste ausgebildet ist. Dies ist bei einem Haushaltskältegerät vorteilhaft, das zwei fronseitige Türen als Flügeltüren aufweist. Ist das Loch in Breitenrichtung betrachtet mittig zwischen den einander zugewandten Schmalseiten der beiden Türen angeordnet, so kann diese Umgebungslichterfassungseinheit für die beiden Türen genutzt werden. Denn dann wird das im geschlossenen Zustand durch beide Türen jeweils nur bereichsweise abgedeckte Loch beim Öffnen einer Tür so freigegeben beziehungsweise dieses Abdecken so aufgehoben, dass ausreichend Umgebungslicht auch durch den freiliegenden Bereich des Lochs zum Helligkeitssensor einfallen kann. Dies auch dann, wenn die zweite Tür noch geschlossen ist und der weitere Bereich des Lochs durch diese zweite Tür noch abgedeckt ist. Im geschlossenen Zustand der Türen liegen diese vorzugsweise an einer vertikal orientierten Frontleiste an. Damit können auch die Beleuchtungsvorrichtungen für jeden Aufnahmeraum individuell und unabhängig voneinander betrieben werden, insbesondere jeweils nur abhängig davon, ob die zugehörige Tür geöffnet ist beziehungsweise wird oder nicht. Es ist dann nur ein solches Loch und ein Helligkeitssensor erforderlich, um zumindest die beiden separaten Beleuchtungsvorrichtungen der beiden separaten Aufnahmeräume abhängig von der jeweiligen Türbetätigung und der Umgebungslichterfassung zu steuern.

In einem Ausführungsbeispiel weist das Haushaltsgerät eine Türbetätigungserkennungseinheit, insbesondere magnetischer, induktiver oder kapazitiver Sensor oder dergleichen, auf. Diese ist bestimmungsgemäß dazu vorgesehen, eine Türbetätigung automatisch zu erfassen, wobei abhängig von einer derartigen Türbetätigung die Erfassungseinheit zum Erfassen der Umgebungshelligkeit aktivierbar ist. Es wird also in einem Ausführungsbeispiel die Erfassungseinheit erst dann aktiviert, wenn die Tür betätigt wird. Ansonsten ist die Erfassungseinheit insbesondere deaktiviert.

Dadurch kann ein energieeffizienter Betrieb erreicht werden. Auch unerwünschte Fehldetektionen, die bei geschlossener Tür auftreten würden und eine zu ungenaue Umgebungshelligkeitserfassung nach sich ziehen würde, können dadurch vermieden werden. Vorzugsweise ist durch diese Türbetätigungserkennungseinheit auch sehr exakt eine Türbetätigung erfassbar. Damit kann auch sehr genau erkannt werden, wann die Erfassung starten soll und darauf folgend eine Anpassung der Beleuchtungsvorrichtung des Haushaltsgeräts durchgeführt werden soll. Ferner übermittelt die Türbetätigungserkennungseinheit vorzugsweise das Öffnen der Tür an eine Steuereinheit des Hausgeräts, welche den Erfassungssensor aktiviert und das erfindungsgemäße Verfahren durchführt.

In einem Ausführungsbeispiel ist vorgesehen, dass das Haushaltsgerät eine Steuereinheit aufweist. Mit dieser Steuereinheit werden die Komponenten des Haushaltsgeräts gesteuert. Insbesondere kann damit auch eine Verarbeitung der Signale der Erfassungseinheit erfolgen.

In einem Ausführungsbeispiel ist vorgesehen, dass insbesondere durch die Steuereinheit gesteuert die Erfassungseinheit zum Erfassen der Umgebungshelligkeit erst dann aktiviert ist, wenn nach erkannter Türbetätigung auch noch zusätzlich ein vorgegebenes Zeitintervall verstrichen ist. Dieses Zeitintervall beträgt maximal eine Sekunde. In einem Ausführungsbeispiel bedeutet dies auch, dass abhängig von einer Türbetätigung, insbesondere einem startenden Öffnungsvorgang der Tür, die Erfassungseinheit erst mit diesem Zeitversatz zur Türöffnung beginnt, die Umgebungshelligkeit zu erfassen. Damit kann auch vermieden werden, dass bei noch geringfügig geöffneter Tür eine Umgebungshelligkeit bestimmt wird, die dann gegebenenfalls zu unkorrekten oder noch ungenauen Ergebnissen führt. Insbesondere ist es ermöglicht, dass durch die Steuereinheit sehr schnell dann auch die Beleuchtungsvorrichtung eingestellt werden kann. Dies bedeutet, dass auch dann, wenn die Tür entsprechend bereits geöffnet ist, das Anpassungsszenario, mit welchem die Beleuchtungsvorrichtung abhängig von der erfassten Umgebungshelligkeit angepasst wird, auch sehr schnell erfolgt. Auch dadurch kann der beobachtende Nutzer dann erkennen, dass das Gerät quasi intelligent auf die Umgebungshelligkeit reagiert und bedarfsgerecht die Beleuchtungsvorrichtung automatisch anpasst. Dieses Anpassen ist durch den Nutzer dann auch quasi noch beobachtbar. Durch die genannten Zeitfenster, bei welchen auch dann innerhalb einer Sekunde nach dem Beginn des Messvorgangs das Erfassen abgeschlossen ist und unverzüglich dann auch das Anpassen der Beleuchtungsvorrichtung erfolgt, kann auch hier beispielsweise ein unerwünschtes Blenden des Beobachters des Innenraums vermieden werden, denn eine zu helle Beleuchtung des Aufnahmeraums ist ab dem Öffnungsbeginn der Tür vermieden.

Da gerade bei Einbaugeräten im geschlossenen Zustand der Tür mit der frontseitig angeordneten Designplatte praktisch kein oder nur ein minimalster Einfall des Umgebungslichts durch Schlitze zwischen der Möbelfrontplatte an der Tür und angrenzenden Möbelwänden erfolgen kann, ist gerade bei Einbaugeräten die Erfassung der Umgebungshelligkeit im geschlossenen Zustand der Tür nicht sinnvoll möglich, um auch eine exakte Aussage über die tatsächliche Helligkeit in der Umgebung treffen zu können. Gerade in solchen Konstellationen ist es daher besonders sinnvoll, dass die Umgebungshelligkeit erst dann begonnen wird, gemessen zu werden, wenn die Tür bereits geringfügig geöffnet ist. Genau bei solchen Konstellationen ist die oben genannte Erfindung besonders sinnvoll.

Einen weiteren Aspekt der Erfindung betrifft ein Verfahren zum Betreiben eines Haushaltsgeräts, aufweisend folgende Schritte:
- Öffnen einer Tür des Haushaltsgeräts;
- automatisches Einstellen eines Basis-Beleuchtungsszenarios zum Beleuchten eines Aufnahmeraums des Haushaltsgeräts, der durch das Öffnen der Tür geöffnet wird, insbesondere unabhängig von der Helligkeit in der Umgebung des Haushaltsgeräts, wobei das Beleuchten des Aufnahmeraums mit einer Beleuchtungsvorrichtung des Haushaltsgeräts durchgeführt wird;
   gekennzeichnet durch folgende Schritte:
   - Erfassung der Helligkeit der Umgebung des Haushaltsgeräts mit einer Umgebungslichterfassungseinheit des Haushaltsgeräts, insbesondere wobei das Erfassens durch das Öffnen der Tür automatisch startet, wobei die Erfassung der Helligkeit der Umgebung mit einer vorgegebenen Zeitdauer versetzt nach dem Starten des Öffnens der Tür startet und/oder die Erfassung der Helligkeit der Umgebung für eine vorgegebene Zeitdauer durchgeführt wird;
   - Auswerten der erfassten Helligkeit der Umgebung mit einer Auswerteeinheit des Haushaltsgeräts;
   - Erzeugen eines End-Beleuchtungsszenarios für den Aufnahmeraum abhängig von der erfassten Helligkeit;
   - Beleuchten des Aufnahmeraums mit dem End-Beleuchtungsszenario bei geöffneter Tür.

Durch ein solches Verfahren ist es nunmehr ermöglicht, dass ein Haushaltsgerät im Hinblick auf die Beleuchtungsvorrichtung bedarfsgerechter betrieben werden kann. Gerade dann, wenn ein kompakter Aufbau des Haushaltsgeräts vorgesehen ist und in dem Zusammenhang insbesondere die Umgebungslichterfassungseinheit im geschlossenen Zustand der Tür zumindest abgeschattet ist, ist das vorgeschlagene Verfahren von besonderer Vorteilhaftigkeit. Denn dann kann im geschlossenen Zustand der Tür dieser Umgebungslichterfassungseinheit auch geschützt angeordnet werden und ist somit, insbesondere durch die Tür selbst, nach vorne hin verdeckt. Auch eine Verschmutzung, beispielsweise durch Staub oder dergleichen, kann daher im geschlossenen Zustand der Tür besser vermieden werden. Dennoch ist es bei dem vorgeschlagenen Verfahren dann erreicht, dass der Aufnahmeraum beziehungsweise der Aufnahmeraum bedarfsgerecht, insbesondere an die Helligkeit der Umgebung angepasst, beleuchtet wird. In dem Zusammenhang ist es bei dem vorgeschlagenen Verfahren dann auch erreicht, dass beim Öffnen der Tür die Möglichkeit der Erfassung der Umgebungshelligkeit gegeben ist und in dem Zusammenhang auch ausreichend schnell erfolgt, damit dann, wenn der Nutzer die Tür so weit geöffnet hat, dass er umfänglich in den Aufnahmeraum blicken kann, bereits das End-Beleuchtungsszenario vorzugsweise aktiviert ist.

Daher ist es auch bei diesem Verfahren ermöglicht, dass der Nutzer von der Beleuchtungssituation im Aufnahmeraum nicht geblendet wird, wenn die Umgebungshelligkeit relativ niedrig ist, andererseits die Beleuchtung des Aufnahmeraums so erfolgt, dass eine einfache und umfängliche Wahrnehmung der Gegenstände im Aufnahmeraum ermöglicht ist. Des Weiteren kann auch bei sehr heller Umgebung eine bedarfsgerechte Beleuchtungsvorrichtung eingestellt werden.

Vorzugsweise wird die Erfassung der Helligkeit der Umgebung nur mit dem Öffnen der Tür automatisch gestartet. Dies bedeutet, dass in diesem Ausführungsbeispiel die einzige Triggerfunktion beziehungsweise das einzige Triggerkriterium, um das Erfassen der Helligkeit der Umgebung mit der Umgebungslichterfassungseinheit zu beginnen, der Öffnungsvorgang der Tür ist. Dies bedeutet also auch hier, dass die Umgebungslichterfassungseinheit insbesondere dann aktiviert wird, wenn ein Öffnungsvorgang der Tür initiiert wird. Dies kann beispielsweise dadurch erfolgen, dass die Tür ausgehend von der geschlossenen Stellung vom Gehäuse des Haushaltsgeräts weggezogen wird und um eine vertikale Schwenkachse geschwenkt wird. Ist die Tür daher bereits geringfügig auf zumindest an einer Seite gegenüber der geschlossenen Stellung von einem Frontbereich des Gehäuses des Haushaltsgeräts abgehoben, gilt dies in einem Ausführungsbeispiel bereits als geöffnete Stellung. Das Öffnen der Tür ist daher zu dem Zeitpunkt in einem Ausführungsbeispiel erfüllt, zu dem ein diesbezüglich geringfügiges Abheben der Tür von dem Frontbereich des Gehäuses erfolgt ist. Diesbezüglich ist dann die Tür an zumindest dieser Stelle vorzugsweise bereits berührungslos zu dem Frontbereich des Gehäuses angeordnet, an dem die Tür im vollständig geschlossenen Zustand direkt anliegt. Das geringfügige Abheben wird üblicherweise durch einen Türsensor, insbesondere Magnetsensor, getriggert. Der Türsensor ist entsprechend dazu vorgesehen, das Abheben der Tür vom Gehäuse des Haushaltsgeräts zu erfassen und über eine Steuereinheit des Hausgeräts oder direkt den abgehobenen Zustand der Tür an die Umgebungslichterfassungseinheit zu melden. Das Öffnen der Tür wird vorzugsweise automatisch durch eine Türbetätigungserkennungseinheit, insbesondere einen magnetischen, induktiven oder kapazitiven Sensor oder dergleichen, erfasst. Diese ist bestimmungsgemäß dazu vorgesehen, eine Türbetätigung zu erfassen, wobei abhängig von einer derartigen Türbetätigung die Erfassungseinheit zum Erfassen der Umgebungshelligkeit aktivierbar ist. Es wird also in einem Ausführungsbeispiel die Umgebungslichterfassungseinheit erst dann aktiviert, wenn die Tür betätigt wird. Ansonsten ist die Umgebungslichterfassungseinheit insbesondere deaktiviert. Dadurch kann ein energieeffizienter Betrieb erreicht werden. Auch unerwünschte Fehldetektionen, die bei geschlossener Tür auftreten würden und eine zu ungenaue Umgebungshelligkeitserfassung nach sich ziehen würde, können dadurch vermieden werden. Vorzugsweise ist durch diese Türbetätigungserkennungseinheit auch sehr exakt eine Türbetätigung erfassbar. Damit kann auch sehr genau erkannt werden, wann die Erfassung starten soll und darauf folgend eine Anpassung der Beleuchtungsvorrichtung des Haushaltsgeräts durchgeführt werden soll. Ferner übermittelt die Türbetätigungserkennungseinheit vorzugsweise das Öffnen der Tür an eine Steuereinheit des Hausgeräts, welche den Erfassungssensor aktiviert und das erfindungsgemäße Verfahren durchführt.

In einem anderen Ausführungsbeispiel kann das Öffnen der Tür bedeuten, dass die Tür so weit geöffnet ist, dass die Umgebungslichterfassungseinheit freiliegt beziehungsweise nicht mehr so abgeschattet ist, dass er die Helligkeit der Umgebung nur unzureichend erfassen könnte. Ist dieses Freiliegen beziehungsweise nicht mehr abgedeckt sein gerade erreicht, kann in diesem Ausführungsbeispiel unverzüglich das Starten der Erfassung der Helligkeit der Umgebung erfolgen.

Im geschlossenen Zustand der Tür erfolgt kein Erfassen der Helligkeit der Umgebung mit der Umgebungslichterfassungseinheit.

Erfindungsgemäß erfolgt das Starten der Erfassung der Helligkeit der Umgebung mit einer vorgegebenen Zeitdauer, insbesondere zwischen 0,5 s und 1,2 s, versetzt nach dem Starten des Öffnens der Tür. Dadurch ist besonders vorteilhaft erreicht, dass die Tür schon so weit geöffnet ist, dass die Helligkeitserfassung ausreichend genau erfolgt. Eine Verfälschung der Erfassung durch ein noch zu starkes Abschatten der Umgebungslichterfassungseinheit durch die Tür ist dadurch vermieden. Dennoch ist dieser Zeitintervall so klein, dass das Erfassen sehr spät nach dem Beginn des Öffnungsvorgangs starten würde und daher der Erfassungsvorgang, insbesondere auch dann noch umfänglich erfolgen würde, wenn die Tür bereits vollständig geöffnet ist. Dies würde dann beispielweise gegebenenfalls wieder zu einem Blenden führen, wenn der Nutzer in den Aufnahmeraum blickt.

In einem Ausführungsbeispiel wird das Erfassen der Helligkeit der Umgebung für eine bestimmte Zeitdauer durchgeführt. Dies kann eine vorgegebene Zeitdauer sein. Insbesondere kann die Zeitdauer maximal zwei Sekunden, insbesondere maximal eine Sekunde, sein. Dies ist ein weiteres sehr vorteilhaftes Ausführungsbeispiel. Denn ein derartiges Zeitfenster ist einerseits groß genug, um eine genauere Erfassung der aktuellen Helligkeit der Umgebung durchzuführen. Es kann somit eine sehr repräsentative Aussage zu der Helligkeit der Umgebung anhand dieser in dieser Zeitspanne erhaltenen Sensorinformationen erreicht werden. Andererseits ist dieses Zeitintervall so klein, dass die Tür im vollständig geöffneten Zustand oder im nahezu vollständig geöffneten Zustand nicht schon länger verharrt oder dort auch noch gar nicht angekommen ist. In diesem Zusammenhang kann nämlich dadurch vermieden werden, dass ab dem Zeitpunkt, ab dem die Tür so weit ausreichend geöffnet ist, dass ein Nutzer umfänglich in den Aufnahmeraum blicken kann, die üblicherweise länger ist als die oben genannte Zeitspanne, die für die Erfassung der Helligkeit der Umgebung vorliegt, ein langes unerwünschtes Blenden oder ein langes zu geringes Ausleuchten vorliegt. Dieses Szenario, bei welchem diese Zeitdauer der Erfassung der Helligkeit der Umgebung kleiner oder gleich der üblichen Zeitdauer ist, die ein Nutzer benötigt, um die Tür vom geschlossenen Zustand in eine derartige weit geöffnete Stellung zu verbringen, in welcher er umfänglich in den Aufnahmeraum blicken kann, ist vorteilhaft. Denn damit kann erreicht werden, dass der Erfassungsvorgang der Helligkeit der Umgebung abgeschlossen ist, sodass vor dem eigentlichen Vorgang des umfänglichen Hineinblickens eines Nutzers in den Aufnahmeraum auch bereits das End-Beleuchtungsszenario vorliegt und eingestellt wird, insbesondere schon fertig eingestellt ist. Vielmehr hat er dann beim eigentlichen Hineinblickungsprozess beziehungsweise beim Beobachtungsprozess des Aufnahmeraums bereits ein Beleuchtungsszenario in Form des End-Beleuchtungsszenarios eingestellt oder es wird dann gerade eingestellt. Unerwünschte Helligkeits- und/oder Farbveränderungen und dadurch eine unerwünschte Beobachtungssituation für den Nutzer sind dadurch auch vermieden.

In einem Ausführungsbeispiel wird bei dem End-Beleuchtungsszenario die Helligkeit des Lichts der Beleuchtungsvorrichtung zur Beleuchtung des Aufnahmeraums im Vergleich zum Basis-Beleuchtungsszenario erhöht und/oder eine Lichtfarbe des Lichts der Beleuchtungsvorrichtung zur Beleuchtung des Aufnahmeraums im Vergleich zum Basis-Beleuchtungsszenario verändert. Es ist also in einem vorteilhaften Ausführungsbeispiel insbesondere die Helligkeit bei dem Basis-Beleuchtungsszenario relativ niedrig eingestellt, sodass bei vielfältigsten Umgebungshelligkeiten dann bedarfsgerecht diese Helligkeit des Lichts der Beleuchtungsvorrichtung erhöht und sehr präzise angepasst werden kann. Insbesondere dahingehend, dass kein Blenden des Beobachters erfolgt, wenn er in den Aufnahmeraum bei geöffneter Tür blickt. Indem gegebenenfalls nur oder zusätzlich auch die Lichtfarbe des Lichts angepasst wird, kann das erzeugte Beleuchtungsszenario noch besser an die jeweilige Umgebungssituation angepasst werden. Ein sehr nutzerfreundliches und bedarfsgerechtes Beleuchtungsszenario ist dadurch erreicht, sodass bei unterschiedlichsten Umgebungsbedingungen eine sehr nutzerfreundliche Beobachtungsmöglichkeit des Aufnahmeraums gegeben ist.

In einem Ausführungsbeispiel wird die Helligkeit des Lichtsignals der Beleuchtungsvorrichtung bei der Änderung der Beleuchtungsszenarien durch eine Pulsweitenmodulation des Lichtsignals verändert. Dies ist insbesondere dann vorteilhaft, wenn die zumindest eine Lichtquelle der Beleuchtungsvorrichtung eine Leuchtdiode ist. Eine sehr präzise und kontinuierliche Helligkeitseinstellung des von der Lichtquelle erzeugten Lichts beziehungsweise des Lichtsignals ist dadurch ermöglicht.

In einem Ausführungsbeispiel wird die Helligkeit des Lichts der Beleuchtungsvorrichtung beim Basis-Beleuchtungsszenario auf einen Wert zwischen 20 Prozent und 30 Prozent, insbesondere auf 25 Prozent, der maximalen Helligkeit der Beleuchtungsvorrichtung eingestellt. Dies ist ein besonders vorteilhaftes prozentuales Werteintervall. Denn dadurch wird einerseits ein relativ niedriger Helligkeitswert als Basiswert eingestellt, sodass in unterschiedlichsten Umgebungsbedingungen dann ein sehr bedarfsgerechtes Anpassen, und somit insbesondere ein Erhöhen, der Helligkeit ermöglicht ist. Andererseits ist dieser Basiswert nicht so klein, dass eine ausreichende Beleuchtung des Aufnahmeraums nicht mehr gegeben wäre. Es kann also auch bereits mit diesem Basiswert eine Beleuchtung des Aufnahmeraums erreicht werden, die bei spezifischen Umgebungsbedingungen ebenfalls ein nutzerfreundliches Beobachten des Aufnahmeraums ermöglicht.

In einem Ausführungsbeispiel wird die Helligkeit des Lichts der Beleuchtungsvorrichtung beim End-Beleuchtungsszenario auf einen Wert zwischen 50 Prozent und 100 Prozent der maximalen Helligkeit der Beleuchtungsvorrichtung eingestellt. Damit ist dann auch in einem Ausführungsbeispiel ein deutlicher Unterschied zu einem Basishelligkeitswert, wie er in dem Basis-Beleuchtungsszenario automatisch eingestellt ist, eingestellt. Insbesondere wird die Helligkeit des Lichts beim End-Beleuchtungsszenario abhängig von der Helligkeit der Umgebung in eine Stufe von insbesondere mehreren diskreten vorgegebenen Stufen eingestellt. Diese Helligkeit ist daher in einem Ausführungsbeispiel ein vorgegebener Endwert, der bei dem End-Beleuchtungsszenario allgemein vorgegeben ist. Möglich ist es auch, dass der Endwert der Helligkeit beim End-Beleuchtungsszenario kontinuierlich veränderbar ist. Möglich ist es andererseits auch, dass abhängig von der Umgebungshelligkeit spezifisch vorgegebene Helligkeitswerte beziehungsweise Endstufen beim End-Beleuchtungsszenario eingestellt werden. Beispielsweise können hier mehrere unterschiedliche Endwerte, wie 50 Prozent und/oder 75 Prozent, und/oder 100 Prozent der maximalen Helligkeit der Beleuchtungsvorrichtung als ebenfalls vorgegebene Endwerte beziehungsweise Endstufen abgelegt und jeweils dann genutzt werden. Vorzugsweise wird diese Erhöhung des Helligkeitswerts von demjenigen Basishelligkeitswert bei dem Basis-Beleuchtungsszenario auf den Helligkeitswert beim End-Beleuchtungsszenario innerhalb einer vorgegebenen Zeitdauer, vorzugsweise innerhalb einer Zeitdauer von kleiner oder gleich 1,5 Sekunden, insbesondere zwischen 0,5 Sekunden und 1,5 Sekunden, eingestellt. Durch eine derartig schnelle Veränderung kann das End-Beleuchtungsszenario auch sehr schnell eingestellt werden, insbesondere noch dann erreicht werden, wenn der Öffnungsprozess der Tür bis hin zur vollständig geöffneten oder im Wesentlichen vollständig geöffneten Tür erreicht ist. Eine derartig vollständig geöffnete Tür ist insbesondere dann erreicht, wenn sie zumindest um 45 Grad, insbesondere zumindest um 50 Grad, insbesondere zumindest um 55 Grad, insbesondere um zumindest 65 Grad, insbesondere zumindest um 70 Grad, insbesondere zumindest um 75 Grad um die Schwenkachse im Vergleich zur vollständig geschlossenen Stellung verschwenkt wurde.

In einem Ausführungsbeispiel wird die Helligkeit des von der Beleuchtungsvorrichtung emittierten Lichts beim Wechsel von dem Basis-Beleuchtungsszenario zum End-Beleuchtungsszenario kontinuierlich verändert. Insbesondere erfolgt ein Dimmen erfolgt. Insbesondere beträgt die Zeitdauer der kontinuierlichen Veränderung zwischen 0,7 s und 1,5 s, insbesondere zwischen 0,8 s und 1,2 s. Dies ist ebenfalls sehr vorteilhaft, da dadurch ein abrupter beziehungsweise eine sprunghafte Änderung der Helligkeit und/oder des Lichtfarbenwechsel vermieden werden kann. Ein besonders vorteilhaftes und nutzerfreundliches Verfahren ist dadurch erreicht, ohne den Nutzer durch Lichteffekte quasi zu erschrecken.

In einem Ausführungsbeispiel wird die Helligkeit der Umgebung bei geschlossener Tür nicht erfasst. Insbesondere ist bei geschlossener Tür die Umgebungslichterfassungseinheit durch die Tür abgeschattet. Dies bedeutet, dass die Tür die Umgebungslichterfassungseinheit insbesondere nicht vollständig abdeckt, aber dennoch so nah dazu angeordnet ist, dass eine Erfassung der Helligkeit der Umgebung nicht oder nur sehr ungenau und dadurch wenig hilfreich ermöglicht wäre. Dies ist beispielweise dann der Fall, wenn das Haushaltsgerät ein Einbaugerät ist und in einer Einbaunische einer Möbelwand angeordnet ist. Da bei solchen Ausführungsbeispielen insbesondere frontseitig an einem Türblatt der Tür eine zusätzliche separate Designplatte, beispielweise eine Möbelfrontplatte ortsfest und mit der Tür bewegungsgekoppelt angeordnet ist, wird durch die Möbelfrontplatte die Einbaunische praktisch vollständig abgedeckt. Die Designplatte kann die Tür an den seitlichen Ränder überragen, so dass die Umgebungslichterfassungseinheit allein durch die Designplatte abgedeckt beziehungsweise abgeschattet sein kann. Die minimalen Spalte zwischen dem Rand der Möbelfrontplatte und den die Einbaunische begrenzenden weiteren Wänden der Möbelwand erlauben allenfalls einen sehr geringen Lichteinfall aus der Umgebung der Möbelwand in die Einbaunische. Daher ist dann bei diesem Ausführungsbeispiel bei geschlossener Tür eine Abschattung der Umgebungslichterfassungseinheit gegeben.

Ein Aspekt der Erfindung betrifft ein Haushaltsgerät mit der Umgebungslichterfassungseinheit gemäß dem oben genannten Aspekt oder einer Umgebungserfassungseinheit. Die Umgebungslichterfassungseinheit beziehungsweise Umgebungserfassungseinheit weist ein Sensorgehäuse und eine Platine auf. Die Platine ist insbesondere eine zusammenhängende einzige Platine, insbesondere bedruckte Leiterplatte, auf welcher zumindest zwei separate Sensoren angeordnet sind, wobei ein Sensor einen ersten Umgebungsparameter erfasst, und ein weiterer Sensor einen zum ersten unterschiedlichen zweiten Umgebungsparameter erfasst. Dadurch ist die Umgebungslichterfassungseinheit beziehungsweise Umgebungserfassungseinheit multifunktioneller ausgebildet. Sie kann kompakt auf einer Platine mehrere Sensoren aufnehmen und es können somit mehrere verschiedene Umgebungsinformationen detektiert werden.

Ein Sensor kann ein Helligkeitssensor sein. Damit ist die Umgebungshelligkeit beziehungsweise das Umgebungslicht erfassbar.

Ein Sensor kann ein Feuchtigkeitssensor sein. Damit kann die Umgebungsfeuchte erfasst werden. Ein Sensor kann ein Temperatursensor sein. Damit kann die Umgebungstemperatur erfasst werden.

Ein Sensor kann ein Türstellungserkennungssensor sein. Damit kann beispielweise auch eine Türöffnung erfasst werden. Der Türstellungserkennungssensor kann ein Magnetsensor sein. Insbesondere ist damit auch das Erkennen von Stellungen von zwei benachbarten Türen, beispielsweise Flügeltüren eines Haushaltskältegeräts ermöglicht, Insbesondere dann, wenn der Türstellungserkennungssensor mittig zwischen den beiden Türen positioniert ist. Auch ist damit die Erkennung von Stellungen von Schubladentüren eines Haushaltskältegeräts ermöglicht.

Die Umgebungslichterfassungseinheit beziehungsweise Umgebungserfassungseinheit weist eine Kommunikationsschnittstelle auf, mit welcher die erfassten Informationen von zumindest zwei der Sensoren übertragbar sind. Damit wird nur eine solche Schnittstelle benötigt, um dennoch Informationen von mehreren Sensoren übertragen zu können.

Insbesondere ist die Kommunikationsschnittstelle ein D-Bus oder ein I2C-Bus. Dies sind sehr vorteilhafte Kommunikationsschnittstellen für die Übertragung von Informationen verschiedener Sensoren. Die Informationen können schnell und Verlustfrei übertragen werden. Eine robuste Kommunikation ist auch bei vielen verschiedenen Sensoren möglich. Insbesondre können auch gleichzeitig Informationen von mehreren Sensoren übertragen werden.

Insbesondere ist auf der Platine zumindest eine Aufnahme, insbesondere Lötpads, ausgebildet, an der wahlweise verschiedene Sensortypen, die den gleichen Umgebungsparameter erfassen, eines Sensors, wahlweise anbringbar sind. Diese bedeute, dass mit einer und derselben Platine ermöglicht wird, einen ersten Sensortyp eines Sensors oder ein zweiten Sensortyp eines Sensors an der Aufnahme anzubringen. Die Aufnahme, die auch als Aufnahmebereich bezeichnet werden kann, ist daher vielfältig kompatibel für diese verschiedenen Sensortypen.

Insbesondere weist die Umgebungserfassungseinheit ein Sensorgehäuse und einen Helligkeitssensor auf. Der Helligkeitssensor detektiert die Helligkeit des Umgebungslichts des Haushaltsgeräts. Der Helligkeitssensor ist in dem Sensorgehäuse angeordnet. Das Haushaltsgerät weist ein Gehäuse mit einer Frontleiste auf. Die Umgebungserfassungseinheit ist an der Frontleiste, insbesondere direkt rückseitig, angeordnet. Dadurch ist diese Umgebungserfassungseinheit platzsparend und geschützt vor mechanischen oder anderweitigen Einflüssen positioniert. Darüber hinaus nutzt sie einen vorzugsweise ohnehin vorhandenen Bauraum im Haushaltsgerät, um auch dort verbaut werden zu können. Dadurch müssen andere Bereiche des Haushaltsgeräts nicht reduziert oder umkonstruiert werden.

Die Umgebungserfassungseinheit ist mit zumindest einer Schnappverbindung rückseitig an der Frontleiste angeordnet. Eine derartige lösbare Verbindung ist einerseits mechanisch stabil, andererseits sehr einfach lösbar und wieder erzeugbar. Ein reversibles Montieren und Demontieren ist dadurch einfach ermöglicht.

Insbesondere ist die oben genannte Frontleiste eine in Höhenrichtung des Haushaltsgeräts betrachtet obere Frontleiste.

Das Sensorgehäuse ist in einem Ausführungsbeispiel mehrteilig ausgebildet. es weist ein frontseitiges Sensorgehäuseteil und ein rückseitiges Sensorgehäuseteil auf.

Die Umgebungserfassungseinheit weist in einem Ausführungsbeispiel zumindest ein optisches Abbildungselement, insbesondere eine Linse auf, mit welcher das auf das Sensorgehäuse einfallende Umgebungslicht zum Helligkeitssensor hin gebündelt ist. Durch ein derartiges Ausführungsbeispiel einer Umgebungserfassungseinheit kann das Umgebungslicht umfänglicher und genauer auf den Helligkeitssensor im Inneren des Sensorgehäuses geleitet werden. Dadurch kann die Genauigkeit der Bestimmung der Helligkeit des Umgebungslichts verbessert, insbesondere präzisiert, werden. Indem hier explizit eine das Licht bündelnde Linse genutzt wird und somit eine Sammellinse, die insbesondere zumindest einseitig konvex ausgebildet ist, genutzt wird, kann die Fokussierung des Umgebungslichts auf den Helligkeitssensor erfolgen.

In einem Ausführungsbeispiel ist die Linse eine zumindest einseitig konvex geformte Linse. Sie kann sphärisch oder asphärisch sein. Ein besonders hoher Lichtanteil des einfallenden Umgebungslichts kann damit gezielt und gerichtet zu dem Helligkeitssensor gelenkt werden.

In einem Ausführungsbeispiel ist der Helligkeitssensor in einem Fokus der Linse angeordnet. Dadurch ist das Umgebungslicht, welches in das Sensorgehäuse einfällt, besonders lokal am Helligkeitssensor ankommend.

In einem Ausführungsbeispiel kann die Linse als separate Komponente zum Sensorgehäuse ausgebildet sein. Sie kann dann auch direkt an dem Sensorgehäuse angeordnet sein. Insbesondere kann das Sensorgehäuse dazu ein Loch aufweisen, in dem oder benachbart zu dem die Linse angeordnet ist.

In einem vorteilhaften Ausführungsbeispiel ist die Linse einstückig mit dem Sensorgehäuse ausgebildet. Damit kann die Bauteilzahl reduziert werden. Eine besonders positionsgenaue Anordnung der Linse zum Sensorgehäuse ist dadurch ermöglicht. Diese Position kann auch dauerhaft aufrechterhalten werden. Eine einstückige Ausgestaltung ermöglicht auch einen einfachen Herstellungsprozess. Beispielsweise kann hier ein Spritzgussbauteil realisiert sein. Möglich ist auch, dass dieses Bauteil ein 2K-Bauteil ist. Damit können beispielsweise das Sensorgehäuse und die Linse aus unterschiedlichen Materialien geformt, insbesondere durch Spritzgießen, hergestellt werden.

Möglich ist es auch, dass das Sensorgehäuse zumindest bereichsweise transparent ist. Dies bedeutet, dass es dann zumindest bereichsweise für Licht im für den Menschen sichtbaren Spektralbereich durchlässig ist. Insbesondere kann das Sensorgehäuse an der Stelle, an der die Linse angeordnet ist, transparent sein.

In einem Ausführungsbeispiel ist die Linse mit zumindest einer Außenseite zur Umgebung hin freiliegend am Sensorgehäuse angeordnet. Dadurch erfolgt der Lichteinfall aus der Umgebung direkt auf die Außenseite der Linse. Umfängliche anderweitige Lichtwege, die das Umgebungslicht zunächst zurücklegen muss, insbesondere auch im Sensorgehäuse, um zu dieser Linse gelangen zu können und dort gebündelt zu werden, können dadurch entfallen. Damit ist auch ein kurzer Weg von der Linse zum Helligkeitssensor im Sensorgehäuse ermöglicht. Unerwünschte Lichtverluste des Umgebungslichts, welches auf das Sensorgehäuse einfällt, können dadurch vermieden werden.

In einem Ausführungsbeispiel weist die Umgebungserfassungseinheit einen zu einer Linse unterschiedlichen Lichtleiter auf. Mit diesem wird bestimmungsgemäß das in das Sensorgehäuse einfallende Licht geleitet. Es kann insbesondere zu dem Helligkeitssensor geleitet werden.

In einem Ausführungsbeispiel sind die Linse und der Lichtleiter miteinander gekoppelt. Insbesondere ist die Linse im Strahlengang des einfallenden Umgebungslichts vor dem Lichtleiter angeordnet. Damit ist es ermöglicht, dass einerseits das Licht gebündelt wird, andererseits durch den Lichtleiter auch gezielt zu dem Helligkeitssensor gelangt. Die Lichtverluste auch im Sensorgehäuse können dadurch nochmals reduziert werden. Ein besonders hoher Anteil des einfallenden Umgebungslichts wird dann sehr gerichtet und definiert zu dem Helligkeitssensor geleitet.

In einem Ausführungsbeispiel ist die Linse als ein Ende des Lichtleiters ausgebildet. Sie ist insbesondere einstückig mit dem Lichtleiter ausgebildet. Durch eine derartige integrierte Ausgestaltung des Lichtleiters mit der Linse kann wiederum die Bauteilzahl reduziert werden und eine besonders exakte Lenkung und Führung des einfallenden Umgebungslichts zu dem Helligkeitssensor hin ermöglicht werden.

Insbesondere ist die Linse mit dem Lichtleiter einstückig hergestellt. Beispielsweise kann dies ein einstückiges Kunststoffbauteil sein.

In einem Ausführungsbeispiel weist die Umgebungserfassungseinheit eine Platine, insbesondere bedruckte Leiterplatte, auf. Auf dieser Platine ist der Helligkeitssensor angeordnet. Es kann in einem Ausführungsbeispiel vorgesehen sein, dass auf dieser Platine zusätzlich auch ein Feuchtigkeitssensor angeordnet ist. Damit kann die eine Platine zur Aufnahme von mehreren unterschiedlichen Sensoren genutzt werden.

Ein weiterer Aspekt der Erfindung betrifft ein Haushaltsgerät. Dieses weist eine Umgebungserfassungseinheit gemäß dem oben genannten Aspekt oder einem vorteilhaften Ausführungsbeispiel davon auf. Das Haushaltsgerät kann insbesondere ein Haushaltskältegerät sein. Diesbezüglich kann es zum Lagern und Konservieren von Lebensmitteln bestimmungsgemäß vorgesehen sein. Das Haushaltskältegerät kann beispielsweise ein Kühlgerät oder ein Gefriergerät sein.

Das Haushaltsgerät weist in einem Ausführungsbeispiel ein Gehäuse auf. In diesem Gehäuse ist zumindest ein Aufnahmeraum für Lebensmittel ausgebildet. Dieser Aufnahmeraum kann ein Kühlfach oder ein Gefrierfach sein. Das Haushaltsgerät weist in einem Ausführungsbeispiel zumindest eine Tür auf, mit welcher der Aufnahmeraum frontseitig verschließbar ist. Die Tür kann bewegbar an dem Gehäuse angeordnet sein. Besonders vorteilhaft ist ein Haushaltsgerät mit einer Umgebungserfassungseinheit dann, wenn dieser Aufnahmeraum durch eine Beleuchtungsvorrichtung des Haushaltsgeräts zumindest bei geöffneter Tür beleuchtet werden soll. Da ein Haushaltsgerät in unterschiedlichsten Umgebungsbedingungen aufgestellt sein kann, können auch sehr vielfältige und unterschiedliche Helligkeiten am Aufstellort auftreten. So kann dies beispielsweise in sehr dunklen Zimmern oder unter sehr dunklen Umgebungsbedingungen dazu führen, dass ein Nutzer, der die Tür öffnet und in den Aufnahmeraum blickt, gegebenenfalls geblendet wird, wenn die Innenraumbeleuchtung beziehungsweise Aufnahmeraumbeleuchtung zu hell ist. Andererseits kann bei anderweitigen Umgebungsbedingungen die Innenraumbeleuchtung zu dunkel oder nicht ausreichend sein beziehungsweise ein ausreichender Kontrast zur Umgebungshelligkeit nicht gegeben sein. Um all diesen sehr unterschiedlichen Aufstellbedingungen und damit einhergehenden sehr unterschiedlichen Umgebungshelligkeitsbedingungen gerecht werden zu können, um auch abhängig davon bedarfsgerecht die Innenraumbeleuchtung einzustellen, ist die oben genannte Erfindung besonders vorteilhaft. Denn es ist damit die besonders exakte Bestimmung der Umgebungshelligkeit ermöglicht. Davon abhängig kann dann wiederum sehr bedarfsgerecht die Innenraumbeleuchtung des Haushaltsgeräts eingestellt werden. Bei dem Öffnen der Tür oder geöffneter Tür und einer aktivierten Innenraumbeleuchtung kann dann dieser Aufnahmeraum sehr bedarfsgerecht und abhängig von dieser detektierten Umgebungshelligkeit ausgeleuchtet werden.

In einem Ausführungsbeispiel weist das Haushaltsgerät ein Gehäuse auf. Insbesondere weist das Haushaltsgerät eine Frontleiste auf. Diese ist an dem Gehäuse angeordnet. Sie ist diesbezüglich frontseitig an dem Gehäuse angeordnet. Die Umgebungserfassungseinheit ist in einem Ausführungsbeispiel an der Frontleiste, insbesondere direkt rückseitig, angeordnet. Sie kann mit einer lösbaren mechanischen Verbindung an der Frontleiste rückseitig angeordnet sein. Beispielsweise kann eine derartige lösbare mechanische Verbindung zumindest eine Schnappverbindung sein. Damit ist ein besonders vorteilhafter Verbau dieses Sensorgehäuses erreicht. Einerseits ist eine mechanisch stabile Befestigung ermöglicht, andererseits eine verdeckte Bauweise ermöglicht. Nach vorne hin liegt somit dieses Sensorgehäuse nicht frei. Dennoch ist es dann ermöglicht, dass das auf die Frontleiste frontseitig einfallende Umgebungslicht zu dem Helligkeitssensor gelangt.

Die Frontleiste kann eine horizontal orientierte oder eine vertikal orientierte Frontleiste sein. Sie kann auch eine Traverse sein. Diese kann balkenartig gebildet sein.

In einem Ausführungsbeispiel weist die Frontleiste ein Loch auf, durch welches die Umgebungserfassungseinheit das einfallende Umgebungslicht, insbesondere mit dem Helligkeitssensor, detektiert. Der Rest der Umgebungserfassungseinheit ist dann durch die Frontleiste bedeckt und auch geschützt angeordnet. Dennoch kann durch dieses Loch hindurch ausreichend Umgebungslicht in das Sensorgehäuse beziehungsweise auf die Linse einfallen.

In einem Ausführungsbeispiel weist das Haushaltsgerät zumindest eine Tür auf, durch welche das Loch im geschlossenen Zustand der Tür zumindest abgeschattet ist, sodass Umgebungslicht allenfalls reduziert zum Loch gelangt. Damit sind bei geschlossener Tür bei diesem Ausführungsbeispiel die Detektion des Umgebungslichts und somit auch die Auswertung der Helligkeit des Umgebungslichts nur eingeschränkt oder unzureichend ermöglicht. Dies ist insbesondere dann der Fall, wenn das Haushaltsgerät ein Einbaugerät ist und an einer Frontseite eines Türblatts der Tür eine separate Designplatte angeordnet ist. Eine derartige Designplatte kann beispielsweise eine Möbelfrontplatte sein. In Höhenrichtung des Haushaltsgeräts betrachtet ist das Loch in der Frontseite überlappend mit der Designplatte angeordnet. In Tiefenrichtung des Haushaltsgeräts ist maximal ein minimaler Abstand zwischen dem Loch und der Designplatte gebildet, sodass das Loch durch die Designplatte zumindest für das Umgebungslicht abgeschattet ist. Gerade bei Einbaugeräten oder Geräten, die mit der geschlossenen Tür eine zwar nicht gegebenenfalls vollständige Abdeckung des Lochs in der Frontleiste vollziehen, jedoch so nahe dazu angeordnet sind, dass eine Abschattung des Umgebungslichts auftritt, ist dennoch dies eine vorteilhafte Verbauposition. Denn es kann platzsparend die Umgebungserfassungseinheit verbaut werden und dennoch dann bei zumindest teilweise geöffneter Tür und dann nicht mehr abgeschatteten Loch in der Frontleiste die Umgebungshelligkeit sehr genau detektiert werden. Obwohl in einem Ausführungsbeispiel dann bei geschlossener Tür aufgrund der zumindest ausgebildeten Abschattung die Umgebungshelligkeit nicht oder nicht ausreichend erfasst werden kann, ist die oben genannte Verbauposition vorteilhaft. Denn es kann beispielsweise oberhalb eines Aufnahmeraums ein vorhandener Freiraum im Gehäuse genutzt werden, in dem auch anderweitige Elektronikkomponenten angeordnet sind. Dieser Platz wird dann auch zusätzlich durch die Umgebungserfassungseinheit belegt. Damit kann das Volumen des Aufnahmeraums beibehalten werden und dieser Bereich für die Elektronikkomponenten, insbesondere oberhalb des Aufnahmeraums, kann zusätzlich genutzt werden, um auch darin die Umgebungserfassungseinheit zu positionieren. Dies hat entsprechende Vorteile bezüglich der Vermeidung von Umkonstruktionen anderweitiger Bereiche des Haushaltsgeräts, insbesondere des Haushaltskältegeräts. Dennoch ist die Konzeption dahingehend, dass bei geöffneter Tür die Umgebungshelligkeit sehr präzise detektiert werden kann. Dies reicht insbesondere aus, um auch sehr schnell und bedarfsgerecht eine Anpassung der Innenraumbeleuchtung an die erfasste Umgebungshelligkeit durchführen zu können, ohne dass ein unerwünschtes Blenden oder ein zu schwaches Ausleuchten des Innenraums, je nach Umgebungshelligkeit, auftreten würde.

In einem Ausführungsbeispiel weist das Haushaltgerät zwei separate Türen auf, die in Breitenrichtung des Haushaltsgeräts nebeneinander angeordnet sind, wobei insbesondere das Loch, insbesondere mittig, zwischen den beiden Türen an der Frontleiste ausgebildet ist. Dies ist bei einem Haushaltskältegerät vorteilhaft, das zwei fronseitige Türen als Flügeltüren aufweist. Im geschlossenen Zustand der Türen können diese an einer vertikal orientierten Frontleiste anliegen. Ist das Loch in Breitenrichtung betrachtet mittig zwischen den einander zugewandten Schmalseiten der beiden Türen angeordnet, so kann diese Umgebungserfassungseinheit für die beiden Türen genutzt werden. Denn dann wird das im geschlossenen Zustand durch beide Türen jeweils nur bereichsweise abgedeckte Loch beim Öffnen einer Tür so freigegeben beziehungsweise dieses Abdecken so aufgehoben, dass ausreichend Umgebungslicht auch durch den freiliegenden Bereich des Lochs zum Helligkeitssensor einfallen kann. Dies auch dann, wenn die zweite Tür noch geschlossen ist und der weitere Bereich des Lochs durch diese zweite Tür noch abgedeckt ist. Damit können auch die Innenraumbeleuchtungen für jeden Aufnahmeraum individuell und unabhängig voneinander betrieben werden, insbesondere jeweils nur abhängig davon, ob die zugehörige Tür geöffnet ist beziehungsweise wird oder nicht. Es ist dann nur ein solches Loch und ein Helligkeitssensor erforderlich, um zumindest die beiden separaten Innenraumbeleuchtungen der beiden separaten Aufnahmeräume abhängig von der jeweiligen Türbetätigung und der Umgebungslichterfassung zu steuern.

In einem Ausführungsbeispiel weist das Haushaltsgerät eine Türbetätigungserkennungseinheit, insbesondere einen magnetischen, induktiven oder kapazitiven Sensor oder dergleichen, auf. Diese ist bestimmungsgemäß dazu vorgesehen, eine Türbetätigung zu erfassen, wobei abhängig von einer derartigen Türbetätigung die Erfassungseinheit zum Erfassen der Umgebungshelligkeit bzw. der Helligkeitssensor aktivierbar ist. Es wird also in einem Ausführungsbeispiel der Helligkeitssensor erst dann aktiviert, wenn die Tür betätigt wird. Ansonsten ist der Helligkeitssensor insbesondere deaktiviert. Dadurch kann ein energieeffizienter Betrieb erreicht werden. Auch unerwünschte Fehldetektionen, die bei geschlossener Tür auftreten würden und eine zu ungenaue Umgebungshelligkeitserfassung nach sich ziehen würde, können dadurch vermieden werden. Vorzugsweise ist durch diese Türbetätigungserkennungseinheit auch sehr exakt eine Türbetätigung erfassbar. Damit kann auch sehr genau erkannt werden, wann die Erfassung starten soll und darauf folgend eine Anpassung der Innenraumbeleuchtung des Haushaltsgeräts durchgeführt werden soll.

In einem Ausführungsbeispiel ist vorgesehen, dass das Haushaltsgerät eine Steuereinheit aufweist. Mit dieser Steuereinheit werden die Komponenten des Haushaltsgeräts gesteuert. Insbesondere kann damit auch eine Verarbeitung der Signale der Erfassungseinheit erfolgen.

In einem Ausführungsbeispiel ist vorgesehen, dass insbesondere durch die Steuereinheit gesteuert die Erfassungseinheit zum Erfassen der Umgebungshelligkeit erst dann aktiviert ist, wenn nach erkannter Türbetätigung auch noch zusätzlich ein vorgegebenes Zeitintervall verstrichen ist. Dieses Zeitintervall beträgt maximal eine Sekunde. In einem Ausführungsbeispiel bedeutet dies auch, dass abhängig von einer Türbetätigung, insbesondere einem startenden Öffnungsvorgang der Tür, die Erfassungseinheit erst mit diesem Zeitversatz zur Türöffnung beginnt, die Umgebungshelligkeit zu erfassen. Damit kann auch vermieden werden, dass bei noch geringfügig geöffneter Tür eine Umgebungshelligkeit bestimmt wird, die dann gegebenenfalls zu unkorrekten oder noch ungenauen Ergebnissen führt. Insbesondere ist es ermöglicht, dass durch die Steuereinheit sehr schnell dann auch die Beleuchtungsvorrichtung eingestellt werden kann. Dies bedeutet, dass auch dann, wenn die Tür entsprechend bereits geöffnet ist, das Anpassungsszenario, mit welchem die Innenraumbeleuchtung abhängig von der erfassten Umgebungshelligkeit angepasst wird, auch sehr schnell erfolgt. Auch dadurch kann der beobachtende Nutzer dann erkennen, dass das Gerät quasi intelligent auf die Umgebungshelligkeit reagiert und bedarfsgerecht die Innenraumbeleuchtung automatisch anpasst. Dieses Anpassen ist durch den Nutzer dann auch quasi noch beobachtbar. Durch die genannten Zeitfenster, bei welchen auch dann innerhalb einer Sekunde nach dem Beginn des Messvorgangs das Erfassen abgeschlossen ist und unverzüglich dann auch das Anpassen der Innenraumbeleuchtung erfolgt, kann auch hier beispielsweise ein unerwünschtes Blenden des Beobachters des Innenraums vermieden werden, denn eine zu helle Beleuchtung des Aufnahmeraums ist ab dem Öffnungsbeginn der Tür vermieden.

Da gerade bei Einbaugeräten im geschlossenen Zustand der Tür mit der frontseitig angeordneten Designplatte praktisch kein oder nur ein minimalster Einfall des Umgebungslichts durch Schlitze zwischen der Möbelfrontplatte an der Tür und angrenzenden Möbelwänden erfolgen kann, ist gerade bei Einbaugeräten die Erfassung der Umgebungshelligkeit im geschlossenen Zustand der Tür nicht sinnvoll möglich, um auch eine exakte Aussage über die tatsächliche Helligkeit in der Umgebung treffen zu können. Gerade in solchen Konstellationen ist es daher besonders sinnvoll, dass die Umgebungshelligkeit erst dann begonnen wird, gemessen zu werden, wenn die Tür bereits geringfügig geöffnet ist. Genau bei solchen Konstellationen ist die oben genannte Erfindung besonders sinnvoll.

Mit den Angaben "oben", "unten", "vorne", "hinten, "horizontal", "vertikal", "Tiefenrichtung", "Breitenrichtung", "Höhenrichtung" sind die bei bestimmungsgemäßen Gebrauch und bestimmungsgemäßen Positionieren des Geräts gegebenen Positionen und Orientierungen angegeben.

Ausführungsbeispiele der Erfindung werden nachfolgend anhand schematischer Zeichnungen näher erläutert. Es zeigen:
Fig. 1 eine schematische perspektivische Darstellung eines Ausführungsbeispiels eines erfindungsgemäßen Haushaltsgeräts mit einem Ausführungsbeispiel einer erfindungsgemäßen Umgebungslichterfassungseinheit;
Fig. 2 eine perspektivische Darstellung des Haushaltsgeräts gemäß Fig. 1 im oberen Bereich;
Fig. 3 eine vergrößerte Teildarstellung eines Ausschnitts in Fig. 2;
Fig. 4 eine perspektivische Schnittdarstellung einer Frontleiste mit einem rückseitig daran angeordneten Sensorgehäuse einer Umgebungslichterfassungseinheit;
Fig. 5 eine perspektivische Schnittdarstellung durch die Anordnung gemäß Fig. 4;
Fig. 6 eine perspektivische Darstellung eines Ausführungsbeispiels eines Teilelements eines Sensorgehäuses einer Umgebungslichterfassungseinheit;
Fig. 7 das Sensorgehäuse gemäß Fig. 6 in einer zu Fig. 6 unterschiedlichen Perspektive;
Fig. 8 ein Ausführungsbeispiel einer optischen Komponente einer Umgebungslichterfassungseinheit;
Fig. 9 eine Frontansicht auf ein weiteres Ausführungsbeispiel eines Haushaltsgeräts;
Fig. 10 eine perspektivische Darstellung des Ausführungsbeispiels gemäß Fig. 9 mit einer geöffneten Tür; und
Fig. 11 eine Darstellung einer Platine mit einer Multisensorbestückung, wobei die Platine Bestandteil einer Umgebungslichterfassungseinheit ist.
Fig. 12 eine perspektivische Darstellung des erfindungsgemäßen Haushaltsgeräts mit einer vollständig geschlossenen Tür;
Fig. 13 eine perspektivische Darstellung eines Ausführungsbeispiels des erfindungsgemäßen Haushaltsgeräts;
Fig. 14 eine perspektivische Darstellung eines Ausführungsbeispiels des erfindungsgemäßen Haushaltsgeräts mit einer zu Fig. 13 weiter geöffneten Tür; und
Fig. 15 ein Diagramm mit Beispielen für Helligkeiten der Beleuchtungsvorrichtung des Haushaltsgeräts abhängig von der Zeit.

In den Figuren werden gleiche oder funktionsgleiche Elemente mit den gleichen Bezugszeichen versehen.

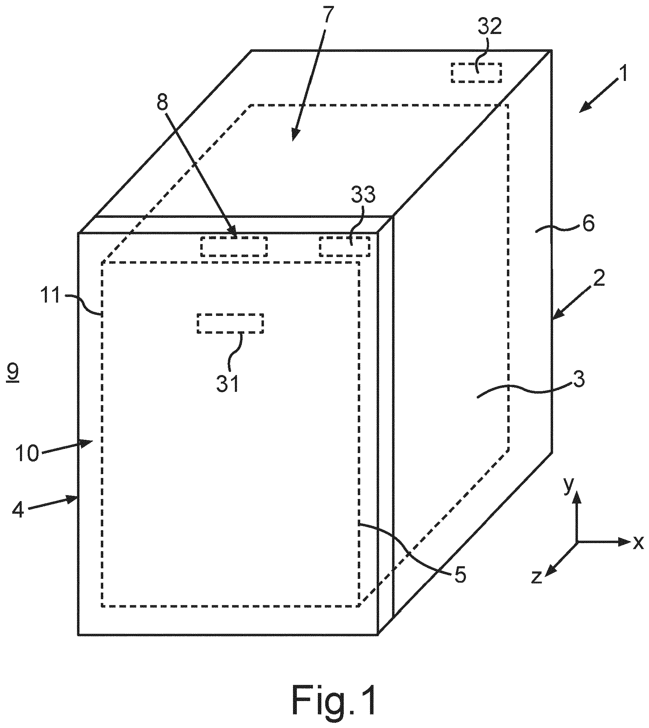

In Fig. 1 ist ein Haushaltsgerät 1 gezeigt. Es kann insbesondere ein Haushaltskältegerät sein. Dieses kann zum Lagern und Konservieren von Lebensmitteln ausgebildet sein. Es kann ein Kühlgerät oder ein Gefriergerät oder ein Kühl-Gefrier-Kombigerät sein. Das Haushaltsgerät 1 kann jedoch auch beispielsweise ein Geschirrspüler sein. Möglich ist auch ein anderweitiges Haushaltsgerät. Insbesondere ein derartiges, welches als Einbaugerät in einer Möbelwand angeordnet werden kann.

Bei dem hier vorgesehen Haushaltsgerät 1 ist vorgesehen, dass es in einem Ausführungsbeispiel ein derartiges Einbaugerät ist. Das Haushaltsgerät 1 weist ein Gehäuse 2 auf. In dem Gehäuse 2 ist zumindest ein Aufnahmeraum 3 ausgebildet. Der Aufnahmeraum 3 ist hier insbesondere zur Aufnahme von Lebensmitteln vorgesehen.

Das Haushaltsgerät 1 weist darüber hinaus eine Tür 4 auf. Die Tür 4 ist bewegbar an dem Gehäuse 2 angeordnet. Sie ist hier zum frontseitigen Verschließen des Innenraums beziehungsweise des Aufnahmeraums 3 angeordnet. Die Tür 4 ist hier im geschlossenen Zustand gezeigt. Der Aufnahmeraum 3 ist durch Wände eines Behälters 5 begrenzt. Der Behälter 5 kann beispielsweise ein aus Kunststoff ausgebildeter Innenbehälter sein. Dies ist insbesondere bei einem Haushaltskältegerät derart realisiert.

Zwischen dem Behälter 5 und einem Außengehäuse 6 kann ein Freiraum ausgebildet sein. Dieser kann zumindest bereichsweise durch thermisch isolierendes Material gefüllt sein. Dies ist beispielsweise bei einem Haushaltskältegerät der Fall. In Höhenrichtung (y-Richtung) ist oberhalb des Behälters 5 und des Außengehäuses 6 ein Freiraum 7 gebildet. Dieser kann auch als Elektronikschacht bezeichnet werden. In diesem Elektronikschacht können Elektronikmodule des Haushaltsgeräts 1 verbaut sein. Im Ausführungsbeispiel ist es vorgesehen, dass in diesem Freiraum 7 auch eine Umgebungslichterfassungseinheit 8 des Haushaltsgeräts 1 angeordnet ist. Diese ist bestimmungsgemäß zumindest dazu vorgesehen, die Helligkeit in einer Umgebung 9 des Haushaltsgeräts 1 zu erfassen. Es wird also die Helligkeit des Umgebungslichts des Haushaltsgeräts 1 durch diese Umgebungslichterfassungseinheit 8 detektiert.

Die Tür 4 weist ein Türblatt 10 auf. Dieses plattenförmige beziehungsweise quaderförmige Bauteil weist ebenfalls eine Außenwand 11 und eine in Fig. 1 nicht zu erkennende Innenwand beziehungsweise Innenverkleidung auf. Insbesondere kann zwischen der Außenwand 11 und dieser Innenverkleidung ein Zwischenraum mit thermisch isolierendem Material gefüllt sein, wie dies beispielsweise bei einem Haushaltskältegerät der Fall ist.

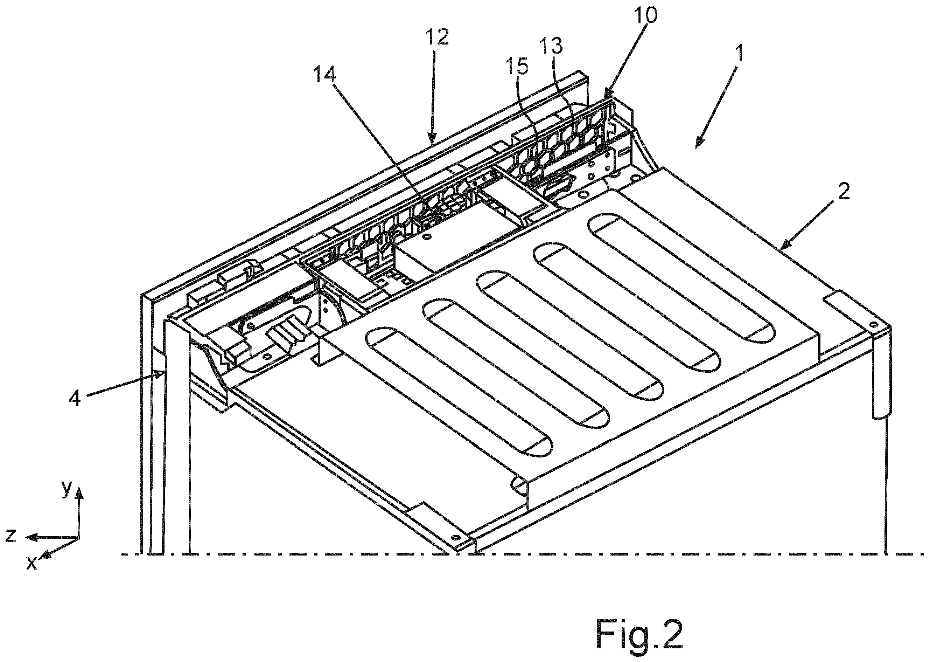

Insbesondere dann, wenn das Haushaltsgerät 1 ein Einbaugerät ist, ist in einem Ausführungsbeispiel auch noch zusätzlich eine Designplatte 12 (Fig. 2) vorhanden. Diese zum Türblatt 10 separate Designplatte 12 kann beispielsweise eine Möbelfrontplatte sein. Sie deckt das Türblatt 10 von vorne her ab, insbesondere vollständig ab. Die Designplatte 12 ist insbesondere fest mit dem Türblatt 10 verbunden und insbesondere mit diesem bewegungsgekoppelt. Bei einem Einbaugerät ist auch vorgesehen, dass dieses Haushaltsgerät 1 in einer Einbaunische einer Möbelwand angeordnet ist. Diese Einbaunische ist üblicherweise durch Begrenzungswände, insbesondere Wandelemente, begrenzt. Darüber hinaus können in Breitenrichtung zur Seite hin und in Höhenrichtung nach oben hin weitere Bereiche dieser Möbelfrontwand anschließen. Es ergibt sich dann im geschlossenen Zustand der Tür 4 lediglich immer nur ein ganz geringer Spalt zwischen den Randkanten der Möbelfrontplatte 12 und den daran anschließenden weiteren Möbelplatten dieser Möbelwand. Daher ist es gerade in diesem Zustand und bei einem solchen Ausführungsbeispiel der Fall, dass Umgebungslicht aus der Umgebung 9 der Möbelwand praktisch nicht oder nicht in ausreichendem Maße in die Einbaunische gelangen kann, wenn die Tür 4 geschlossen ist. Damit kann gerade in diesem Zustand und bei geschlossener Tür 4 eine ausreichende Detektion der Umgebungshelligkeit nicht erfolgen.

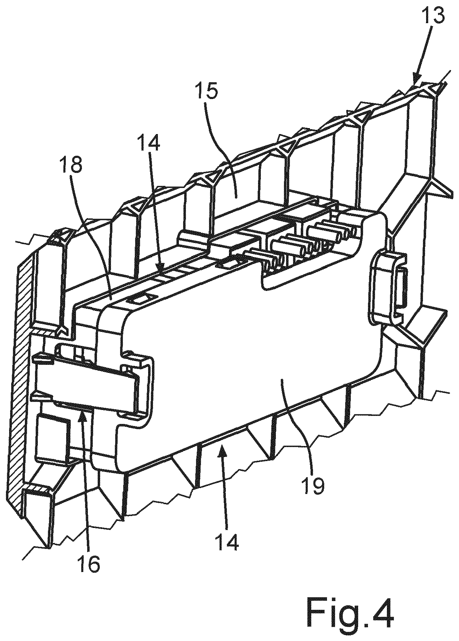

In Fig. 2 ist ein Ausführungsbeispiel des Haushaltsgeräts 1 in Teildarstellung und perspektivisch von oben dargestellt. Wie zu erkennen ist, weist das Gehäuse 2 in einem in Tiefenrichtung (z-Richtung) betrachtet vorderen Bereich eine Frontleiste 13 auf. Die Frontleiste 13 erstreckt sich plattenartig beziehungsweise streifenförmig in Breitenrichtung (x-Richtung). Die Frontleiste 13 ist insbesondere eine separate Komponente. Sie ist insbesondere an einem Frontflansch des Gehäuses 2, insbesondere des Außengehäuses 6, angeordnet. Sie ist hier im Ausführungsbeispiel eine obere Frontleiste 13. Dies bedeutet, dass sie am oberen vorderen Randbereich des Gehäuses 2, insbesondere des Außengehäuses 6, angeordnet ist. An dieser Frontleiste ist im gezeigten Ausführungsbeispiel ein Sensorgehäuse 14 der Umgebungslichterfassungseinheit 8 angeordnet. Insbesondere ist dieses Sensorgehäuse 14 an einer Rückseite 15 dieser Frontleiste 13 direkt angeordnet. In einem Ausführungsbeispiel kann hier eine lösbare mechanische Verbindung realisiert sei. Wie dazu beispielsweise in Fig. 4 zu erkennen ist, ist eine Schnappverbindung 16 ausgebildet. Mit dieser ist das Sensorgehäuse 14 an dieser Rückseite 15 verschnappt.

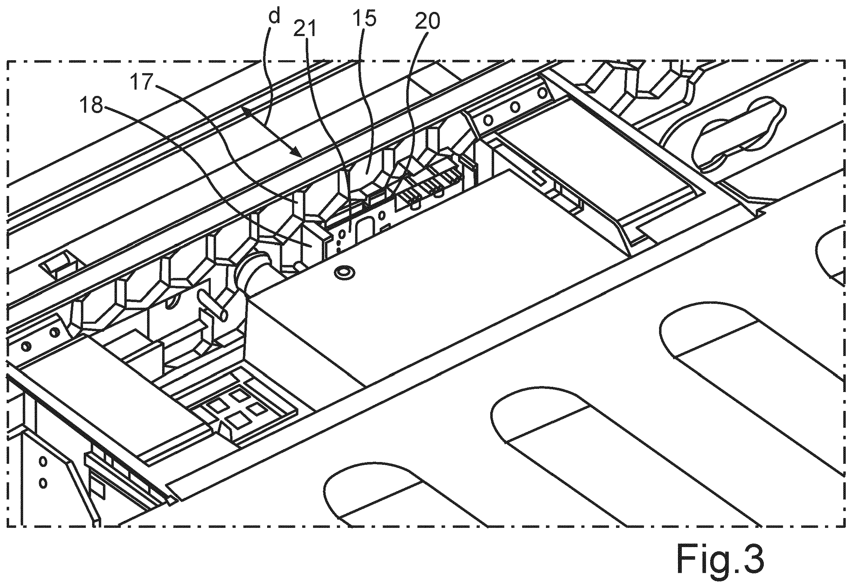

Die Frontleiste 13 ist vorzugsweise aus Kunststoff ausgebildet. Sie ist insbesondere einstückig hergestellt. Beispielsweise kann sie ein Spritzgussbauteil sein. Wie in Fig. 2 und in einer vergrößerten Teildarstellung eines Ausschnitts von Fig. 2 in Fig. 3 zu erkennen ist, ist die Rückseite 15 in einem Ausführungsbeispiel mit einer Versteifungsstruktur 17 gebildet. Dies kann beispielsweise eine Wabenstruktur sein.

In Fig. 3 ist in der vergrößerten Darstellung das Sensorgehäuse 14 gezeigt. Es ist hier ein Sensorgehäuse 14 realisiert, welches aus mehreren Sensorgehäuseteilen aufgebaut ist. In Fig. 3 ist hier ein vorderes Sensorgehäuseteil 18 dargestellt. Dieses ist insbesondere direkt an der Rückseite 15 anliegend.

Das Sensorgehäuse 14 weist in einem Ausführungsbeispiel darüber hinaus auch ein weiteres zweites Sensorgehäuseteil 19 auf. Dies ist in Fig. 4 gezeigt. Die beiden Sensorgehäuseteile 18 und 19 sind in einem Ausführungsbeispiel durch eine lösbare Verbindung, beispielsweise durch eine Schnappverbindung, miteinander verbunden. Möglich ist es auch, dass die Schnappverbindung 16, mit welcher das Sensorgehäuse 14 an der Rückseite 15 angeordnet ist, zugleich auch diejenige Schnappverbindung ist, mit welcher die beiden Sensorgehäuseteile 18 und 19 zusammengehalten werden.

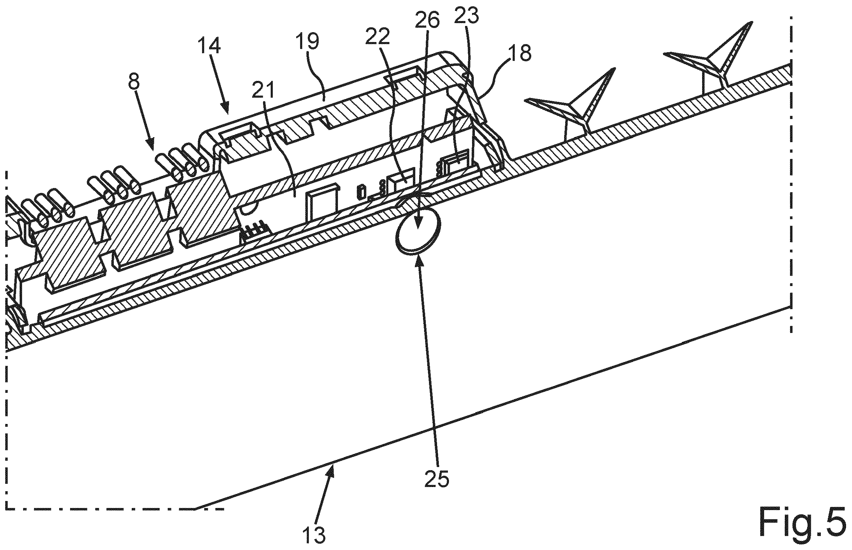

Durch die Sensorgehäuseteile 18 und 19 wird ein Innenraum 20 (Fig. 3) realisiert. In diesem ist eine Platine 21 der Umgebungslichterfassungseinheit 8 angeordnet. Auf dieser Platine 21 ist in einem Ausführungsbeispiel ein Helligkeitssensor 22 (Fig. 5) angeordnet. In einem Ausführungsbeispiel kann auf der gemeinsamen Platine 21 zusätzlich auch ein Feuchtigkeitssensor 23 angeordnet sein.

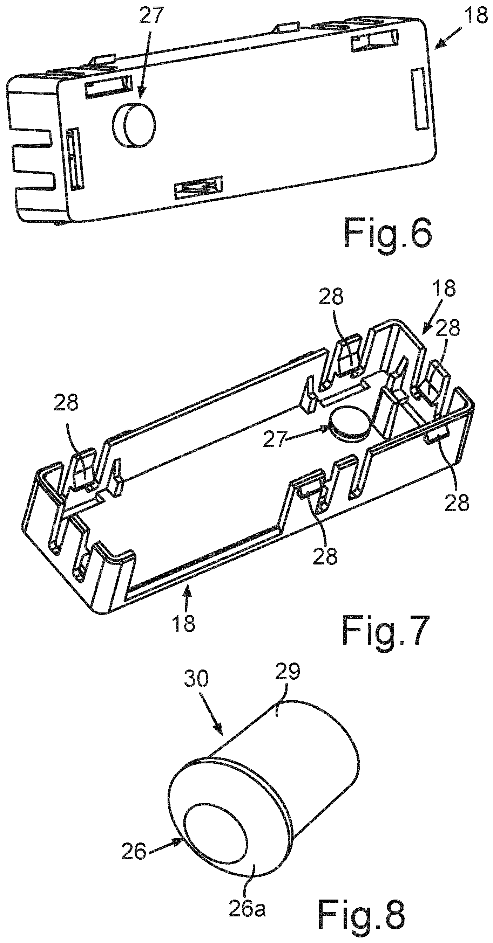

Wie in Fig. 5, in welcher eine perspektivische Schnittdarstellung der Anordnung 24 in Fig. 4 zu erkennen ist, weist die Frontleiste 13 ein durchgängiges Loch 25 auf. Durch dieses Loch kann Umgebungslicht aus der Umgebung 9 insbesondere auch durch die Frontleiste 13 hindurch in das Sensorgehäuse 14 einfallen. Es ist insbesondere vorgesehen, dass die Umgebungslichterfassungseinheit 8 zumindest ein optisches Abbildungselement, insbesondere eine Linse 26, aufweist. Die Linse 26 ist eine Linse, die einfallendes Umgebungslicht bündelt. Sie kann an zumindest einer optischen Oberseite konvex gekrümmt ausgebildet sein. Insbesondere ist die Linse 26 eine Sammellinse. Die Linse 26 ist in einem Ausführungsbeispiel mit zumindest einer Außenseite 26a (Fig. 8) zur Umgebung 9 hin freiliegend am Sensorgehäuse 14 angeordnet.

In einem Ausführungsbeispiel ist vorgesehen, dass die Linse 26 so angeordnet ist, dass einfallendes Umgebungslicht auf den Helligkeitssensor 22 gebündelt wird. Die Linse 26 kann eine zum Sensorgehäuse 14, insbesondere zum vorderen Sensorgehäuseteil 18, separate Komponente sein. Möglich ist es auch, dass die Linse 26 einstückig mit dem vorderen Sensorgehäuseteil 18 ausgebildet ist.

In Fig. 6 ist in einem Ausführungsbeispiel eine perspektivische Darstellung des vorderen Sensorgehäuseteils 18 gezeigt. Es ist hier zu erkennen, dass integriert ein optisches Element 27 mit diesem Sensorgehäuseteil 18 ausgebildet ist. Eine derartige einstückige Ausgestaltung kann beispielsweise durch Kunststoff realisiert sein. Beispielsweise kann dieses Gesamtbauteil als Spritzgussbauteil ausgebildet sein. Das optische Element 27 kann beispielsweise die Linse 26 sein. Möglich ist es auch, dass dieses optische Teil 27 ein zylinderförmiger Lichtleiter ist. Ein derartiger Lichtleiter kann eine zusätzliche Komponente der Umgebungslichterfassungseinheit 8 in einem weiteren Ausführungsbeispiel sein. Insbesondere dann, wenn die Umgebungslichterfassungseinheit 8 sowohl eine Linse 26 als auch einen Lichtleiter aufweist, kann die Linse 26 im Strahlengang des einfallenden Umgebungslichts vor dem Lichtleiter angeordnet sein. Durch eine Linse 26 und mit einem Lichtleiter kann einerseits die Bündelung der Lichtstrahlen mittels der Linse 26 erfolgen und andererseits die gezieltere und gerichtete Weiterleitung der Lichtstrahlen zu dem Helligkeitssensor 22 mit dem Lichtleiter erfolgen.

In Fig. 7 ist das vordere Sensorgehäuseteil 18 in einer zu Fig. 6 unterschiedlichen Perspektive gezeigt. Insbesondere sind dort auch die in einem Beispiel vorgesehenen Schnappelemente 28 gezeigt, von denen lediglich einige mit einem Bezugszeichen versehen sind. Mittels dieser Schnappelemente 28 kann ein direktes Verschnappen mit dem hinteren Sensorgehäuseteil 19 und/oder der Frontleiste 13 erfolgen.

In Fig. 8 ist in einem Ausführungsbeispiel ein Lichtleiter 29 gezeigt. Zusätzlich ist hier die Linse 26 gezeigt. In einem Ausführungsbeispiel kann die zumindest frontseitig konvex gekrümmte Linse 26 auch einstückig mit dem Lichtleiter 29 ausgebildet, insbesondere einstückig hergestellt, sein. Die Linse 26 ist in einem Ausführungsbeispiel dann das frontseitige Ende dieses Gesamtteils 30. Die Linse 26 kann zumindest bereichsweise in dem Loch 25 angeordnet sein. Möglich ist es auch, dass die Linse 26 nach hinten zurückversetzt gegenüber dem Loch 25 angeordnet ist.

Auch das in Fig. 8 gezeigte Beispiel des einstückigen Gesamtteils 30 kann separat zu dem vorderen Sensorgehäuseteil 18 oder einstückig damit ausgebildet sein.

In einem Ausführungsbeispiel weist das Haushaltsgerät 1 eine Beleuchtungsvorrichtung 31 auf, wie dies in Fig. 1 symbolisch dargestellt ist. Diese Beleuchtungsvorrichtung 31 ist zum Ausleuchten des zumindest einen Aufnahmeraums 3 angeordnet. Insbesondere bei geöffneter Tür 4 ist diese Beleuchtungsvorrichtung 31 aktiviert.

Eine Steuereinheit 32 des Haushaltsgeräts 1 ist vorgesehen. Mit der Steuereinheit 32 können Funktionskomponenten des Haushaltsgeräts 1 gesteuert werden. Insbesondere ist mit der Steuereinheit 32 auch die Steuerung der Beleuchtungsvorrichtung 31 möglich. Insbesondere erfolgt dies abhängig von der mit der Umgebungslichterfassungseinheit 8 erfassten Umgebungshelligkeit. Damit kann das Beleuchten des Aufnahmeraums 3 mit dieser Beleuchtungsvorrichtung 31 sehr bedarfsgerecht und angepasst an die Umgebungshelligkeit in der Umgebung 9 erfolgen.

Insbesondere ist es vorgesehen, dass das Aktivieren der Umgebungslichterfassungseinheit 8 abhängig von einer Betätigung der Tür 4 erfolgt. Dazu kann eine Türbetätigungserkennungseinheit 33 vorgesehen sein. Somit kann in einem Ausführungsbeispiel diese Türbetätigung auch automatisch detektiert werden. Eine Türbetätigung ist beispielsweise das Initiieren eines Öffnungsvorgangs ausgehend von dem geschlossenen Zustand der Tür 4. Wird beispielsweise die Tür 4 ausgehend von dem geschlossenen Zustand geöffnet, so werden über die Steuereinheit 32 das Erfassen des Umgebungslichts und die Auswertung der Helligkeit des Umgebungslichts gestartet. Es kann in einem Ausführungsbeispiel dazu vorgesehen sein, dass zwischen dem Beginn der Türbetätigung und dem Starten der Erfassung der Helligkeit des Umgebungslichts ein definierter Zeitversatz vorgegeben ist. Dieser kann beispielsweise maximal eine Sekunde betragen. Dies bedeutet, dass nach dem Beginn der Türbetätigung und diesem Verstreichen des vorgegebenen Zeitversatzes dann die Erfassung des Umgebungslichts mit der Umgebungslichterfassungseinheit 8 gestartet wird. In einem Ausführungsbeispiel kann die Zeitdauer für diesen Erfassungsvorgang vorgegeben sein. In einem Ausführungsbeispiel kann diese Erfassungszeitdauer zwischen 0,5 Sekunden und 1,5 Sekunden dauern. Nach dem Auswerten der Informationen zum Umgebungslicht wird dann durch die Steuereinheit 32 die Beleuchtungsvorrichtung 31 individuell angesteuert, um ein spezifisches Beleuchtungsszenario im Aufnahmeraum 3 zu erzeugen. Damit wird ein Nutzer, der bei geöffneter Tür 4 in den Aufnahmeraum 3 blickt, nicht geblendet oder mit einem zu niedrigen Ausleuchten oder einem zu hellen Ausleuchten konfrontiert. Insbesondere nimmt der Nutzer beim Öffnen der Tür 4 dieses bedarfsgerechte Anpassen des Beleuchtungsszenarios des Aufnahmeraums 3 mit der Beleuchtungsvorrichtung 31 auch wahr. Vorzugsweise wird daher dieses Anpassen der Beleuchtung des Aufnahmeraums 3 bei bereits teilweise geöffneter Tür 4 vorgenommen, sodass der Nutzer auch ganz bewusst diese Veränderung dieses Beleuchtungsszenarios wahrnimmt. Möglich ist es in dem Zusammenhang auch, dass mit dem Beginn der Türbetätigung die Beleuchtungsvorrichtung 31 mit einer vorgegebenen Basishelligkeit und/oder einer vorgegebenen Basislichtfarbe beleuchtet ist. Ist dann die Erfassung des Umgebungslichts und die Bestimmung der Helligkeit des Umgebungslichts abgeschlossen, wird in einem Ausführungsbeispiel unverzüglich diese Grundeinstellung der Beleuchtungsvorrichtung 31 bedarfsgerecht angepasst. Beispielsweise kann hier dann die Helligkeit ausgehend von einem Basiswert, beispielsweise 25 Prozent der maximalen Helligkeit der Beleuchtungsvorrichtung 31, sukzessive erhöht werden, insbesondere innerhalb eines vorgegebenen Zeitintervalls. Dieses Zeitintervall kann beispielsweise zwischen 0,5 und 1,5 Sekunden betragen. Beispielsweise kann dann abhängig von der detektierten Helligkeit des Umgebungslichts die Helligkeit auf einen Wert zwischen 50 Prozent und 100 Prozent der maximalen Helligkeit der Beleuchtungsvorrichtung 31 eingestellt werden. Diesbezüglich können dann auch diskret vorgegebene prozentuale Helligkeitseinstellungen abhängig von der maximalen Helligkeit dieser Beleuchtungsvorrichtung 31 eingestellt werden.

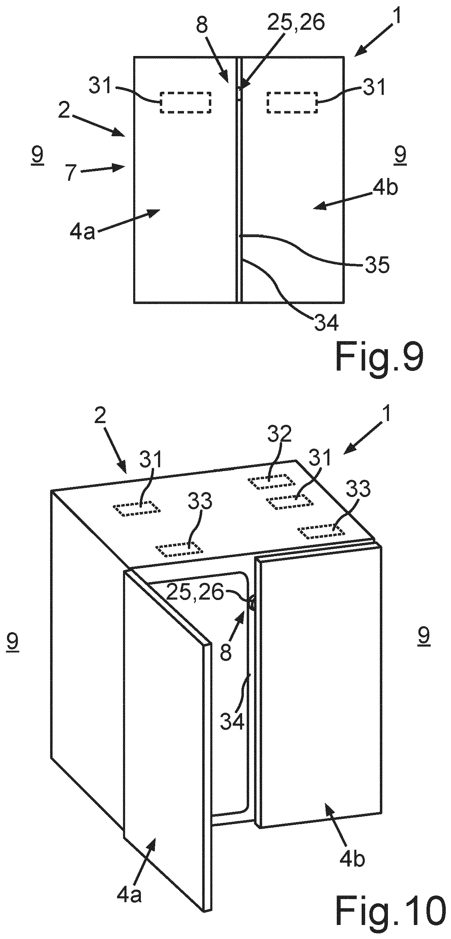

In Fig. 9 ist ein weiteres Ausführungsbeispiel für ein Haushaltsgerät 1 gezeigt. Es ist hier ein Haushaltskältegerät. Es ist in Frontansicht gezeigt. Das Haushaltsgerät 1 weist hier zwei separate Türen 4a und 4b auf. Diese sind Frontüren. Sie können auch als Flügeltüren bezeichnet werden. Sie sind im gezeigten geschlossenen Zustand in Breitenrichtung (x-Richtung) nebeneinander angeordnet. Sie sind auf gleicher Höhenlage angeordnet und auf gleicher Tiefenlage angeordnet. Die Türen 4a und 4b verschließen in einem Ausführungsbeispiel je einen Aufnahmeraum beziehungsweise Innenraum für Lebensmittel. Die Aufnahmeräume sind separiert voneinander. Insbesondere weist das Haushaltsgerät 1 zwei separate Beleuchtungsvorrichtungen 31 auf. Je eine ist für das beleuchten eines der beiden Aufnahmeräume vorgesehen. Das Beleuchten der Aufnahmeräume mit den zugeordneten Beleuchtungsvorrichtungen 31 kann unabhängig voneinander erfolgen. Insbesondere erfolgt das Aktivieren einer Beleuchtungsvorrichtung entsprechend den Erläuterungen, wie es oben für die anderen Ausführungsbeispiele dargelegt wurde.

Im geschlossen Zustand der Türen 4a und 4b kann ein Spalt 35 zwischen den einander zugewandten Schalseiten der Türen 4a und 4b gebildet sein. Zu erkennen ist auch eine vertikale Frontleiste 34. An dieser liegen die Türen 4a und 4b im geschlossenen Zustand an. An dieser hier vertikal orientierten Frontleiste 34 ist die Umgebungslichterfassungseinheit 8 angeordnet. Insbesondere ist die Umgebungslichterfassungseinheit 8 an der Rückseite der Frontleiste 34 angeordnet. Der Aufbau der Umgebungslichterfassungseinheit 8 kann in einem Ausführungsbeispiel so sein, wie es zu den bisherigen Ausführungsbeispielen erläutert wurde. Die vertikale Frontleiste 34 weist ein Loch 25 auf, durch welches Umgebungslicht zum Helligkeitssensor 22 einfallen kann. Wie in Fig. 1 zu erkennen ist, ist das Loch 25 vorzugsweise mittig zwischen den Türen 4a und 4b, insbesondere mittig zwischen den einander zugewandten Schmalseiten der Türen 4a und 4b angeordnet. Da der Spalt 35 klein ist, fällt im Zustand, in dem beide Türen 4a und 4b geschlossen sind, nicht ausreichend Umgebungslicht durch das Loch 25 ein. Daher wird im geschlossen Zustand der Türen 4a und 4b keine Detektion der Umgebungshelligkeit durchgeführt. Insbesondere ist daher im geschlossenen Zustand beider Türen 4a und 4b die Umgebungshelligkeitserfassungseinheit 8 zumindest dahingehend deaktiviert, dass mit dem Helligkeitssensor 22 die Umgebungshelligkeit gemessen werden würde.

Das Loch 25 ist im geschlossenen Zustand der Türen 4a und 4b jeweils bereichsweise durch diese abgedeckt.

Wird eine Tür 4a, 4b geöffnet, beispielweise die Tür 4a, wie dies in Fig. 2 gezeigt ist, dann wird der Teilbereich des Lochs 25, der durch diese Tür 4a abgedeckt war, freigegeben. Auch dann, wenn die andere Tür, hier die Tür 4b, geschlossen bleibt, ist dann das Loch 25 ausreichend groß freigegeben, so dass ausreichend Umgebungslicht einfallen kann und eine genaue Detektion der Umgebungshelligkeit mit dem Helligkeitssensor 22 erfolgen kann. Abhängig davon wird dann diejenige Beleuchtungsvorrichtung 31 aktiviert und betrieben, die nur denjenigen Aufnahmeraum beleuchten soll, der durch die geöffnete Tür, hier die Tür 4a, frontseitig verschließbar ist.

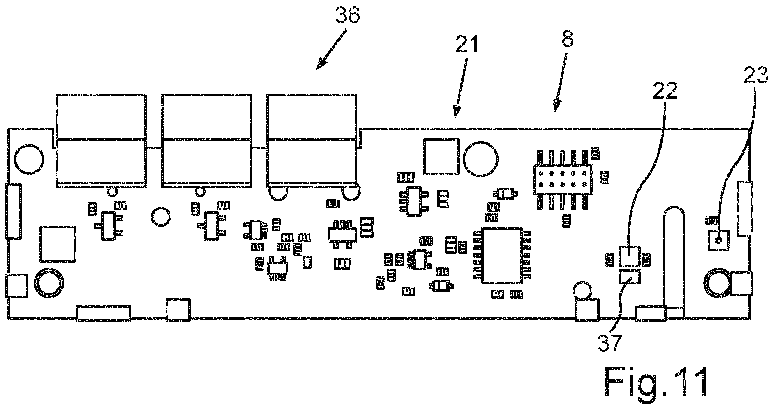

In Fig. 11 ist eine Draufsicht auf ein Ausführungsbeispiel für eine Platine 21 gezeigt. Diese einzige zusammenhängende Platine 21 ist somit einstückig ausgebildet. Diese Platine 21 ist als Multi-Sensor-Platine gebildet. Dies bedeutet, dass auf dieser Platine 21 zumindest zwei verschiedene Sensoren angeordnet sind. Ein Sensor kann einen ersten Umgebungsparameter erfassen und der zweite Sensor kann einen dazu unterschiedlichen zweiten Umgebungsparameter erfassen. Ein Sensor kann ein Helligkeitssensor 22 sein. Ein Sensor kann ein Feuchtigkeitssensor 23 sein. Ein weiterer Sensor kann ein Temperatursensor sein.

In einem Ausführungsbeispiel weist die Umgebungslichterfassungseinheit 8 eine Kommunikationsschnittstelle 36 auf, die hier beispielhaft gezeigt ist. Die Kommunikationsschnittstelle 36 ist insbesondere eine D-Bus-Schnittstelle. Die Kommunikationsschnittstelle 36 kann ein I2C-Bus sein. Es kann somit über nur eine solche spezifische Kommunikationsschnittstelle 36 Informationen von mehreren unterschiedlichen Sensoren zu übertragen. Diese durch die Sensoren erfassten Informationen können somit mit dieser Kommunikationsschnittstelle 36 einer Steuereinheit, insbesondere der Steuereinheit 32, übermittelt werden. Beispielweise kann damit eine Beleuchtungsvorrichtung 31 und/oder eine Heizung des Haushaltsgeräts 1 gesteuert werden.

In einem Ausführungsbeispiel weist die Platine 21 Aufnahmebereiche 37 (Fig. 11) auf, die zur Aufnahme von verschiedenen Sensortypen ausgebildet sind, wobei die verschiedenen Sensortypen aber den gleichen Umgebungsparameter erfassen. Es ist dadurch eine Variabilität zur Montage von verschiedenen Sensortypen geschaffen, und es kann dazu stets die gleiche Platine 21 genutzt werden. Das bedeutet, dass das Layout der Platine 21 gleich ist, unabhängig davon, welcher Sensortyp darauf verbaut wird. Insbesondere sind dazu die Aufnahmen als spezifische Lötpads gebildet. Dieses Ausführungsbeispiel kann auch zusätzlich zu dem Ausführungsbeispiel mit der Multisensoranordnung mit verschiedenen Sensoren, die unterschiedliche physikalische Umgebungsparameter erfassen, vorgesehen sein.

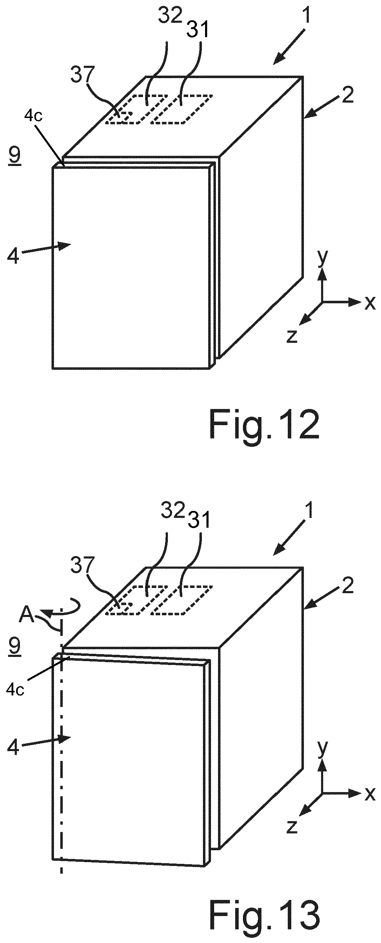

In Fig. 12 ist in einer perspektivischen Darstellung ein Ausführungsbeispiel des erfindungsgemäßen Haushaltsgeräts gezeigt. Das Haushaltskältegerät 1 weist ein Gehäuse 2 auf. In dem Gehäuse 2 ist zumindest ein Aufnahmeraum 3 beziehungsweise Innenraum für Lebensmittel ausgebildet. Ein derartiger Aufnahmeraum 3 kann beispielsweise ein Kühlfach oder ein Gefrierfach sein. Des Weiteren weist das Haushaltsgerät 1 eine Tür 4 auf. Die Tür 4 weist an der oberen Kante oder Flanke eine Türabschlussleiste 4c auf, an der die Umgebungslichterfassungseinheit 8 ebenso rückseitig angeordnet sein kann. Diese ist in Fig. 1 im vollständig geschlossenen Zustand gezeigt. Die Tür 4 verschließt frontseitig den genannten Aufnahmeraum. Das Haushaltsgerät 1 weist darüber hinaus eine Steuereinheit 32 auf. Diese Steuereinheit 32 ist in Fig. 1 lediglich symbolhaft dargestellt. Das Haushaltsgerät 1 weist darüber hinaus eine Beleuchtungsvorrichtung 31 auf. Diese ist dazu vorgesehen, einen Aufnahmeraum 3 (Fig. 3) zu beleuchten. Der Aufnahmeraum 3 ist diesbezüglich der Aufnahmeraum für Lebensmittel, wie er bereits oben erläutert wurde.

Das Haushaltsgerät 1 ist in einer Umgebung 9 aufgestellt.

In einem Ausführungsbeispiel ist der Aufnahmeraum beziehungsweise Innenraum bei vollständig geschlossener Tür 4, wie dies in Fig. 12 gezeigt ist, nicht beleuchtet. Insbesondere ist daher diese Beleuchtungsvorrichtung 31 in diesem vollständig geschlossenen Zustand der Tür 4 bezüglich der Lichtemission deaktiviert.

Wird nun ausgehend von der in Fig. 1 gezeigten Situation die Tür 4 von dem vollständig geschlossenen Zustand in einen geöffneten Zustand übergeführt, wie dies in Fig. 13 symbolhaft angedeutet ist, erfolgt in einem Ausführungsbeispiel das Aktivieren der Beleuchtungsvorrichtung 31. Insbesondere ist daher dieser Öffnungsvorgang der Tür 4 ein Startkriterium zum Aktivieren der Beleuchtungsvorrichtung 31. In einem Ausführungsbeispiel kann vorgesehen sein, dass dieses Öffnen der Tür 4 durch einen Sensor erfasst wird und die diesbezüglichen Informationen an die Steuereinheit 32 übertragen werden. Abhängig davon wird die Beleuchtungsvorrichtung 31 dann durch die Steuereinheit entsprechend gesteuert.

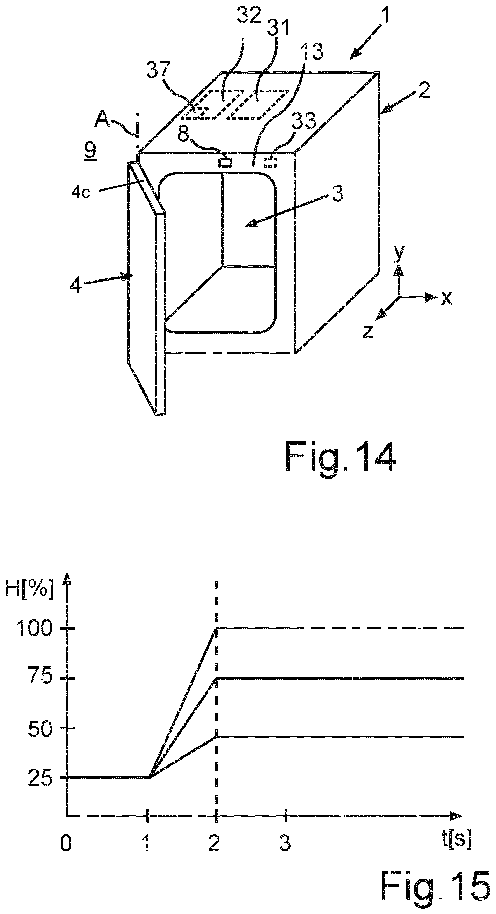

Wie in Fig. 14 zu erkennen ist, weist das Haushaltskältegerät 1 zumindest eine Umgebungslichterfassungseinheit 8 auf. Diese Umgebungslichterfassungseinheit 8 ist zur Erfassung der Helligkeit in der Umgebung 9 ausgebildet. Die Umgebungslichterfassungseinheit 8 kann in einem Ausführungsbeispiel an einer Frontleiste 13 beziehungsweise Frontflansch des Gehäuses 2 angeordnet sein. Ferner kann die Umgebungslichterfassungseinheit 8 auch rückseitig an der Türabschlussleiste 4c der Tür 4 angeordnet sein. Die Frontleiste 13 ist in einem Ausführungsbeispiel so positioniert, dass er im geschlossenen Zustand der Tür 4 zumindest durch die Tür 4 zumindest abgeschattet ist. Dies bedeutet, dass er im geschlossenen Zustand der Tür 4 die Helligkeit der Umgebung 9 nicht oder nicht ausreichend genau detektieren kann. Die Tür 4 kann eine die seitlichen Ränder der Tür 4 überragende Dekorplatte 12 (Fig. 2) sein.

Wird allerdings die Tür 3 von dem vollständig geschlossenen Zustand gemäß der Darstellung in Fig. 12 geöffnet beziehungsweise startet dieser Öffnungsvorgang, wird in einem Ausführungsbeispiel die Umgebungslichterfassungseinheit 8 nicht mehr von der Tür 4 abgeschattet und kann dann die Helligkeit der Umgebung 9 erfassen. Dies ist in Fig. 13 gezeigt. Insbesondere kann vorgesehen sein, dass abhängig davon, wo die Umgebungslichterfassungseinheit 8 an der Frontleiste 13 angeordnet ist, der Öffnungswinkel der Tür 4 im Hinblick auf ein nicht mehr gegebenes Abdecken der Umgebungslichterfassungseinheit 8 unterschiedlich ist. Es kann dabei vorgesehen sein, dass die Umgebungslichterfassungseinheit 8 relativ seitlich an der Frontleiste 13 angeordnet ist. Dies insbesondere an derjenigen Seite, die bezüglich der Tür 4 die Öffnungsseite ist und die beim Öffnen zuerst von dem Frontleiste 13 wegbewegt wird. Diesbezüglich ist dann der Öffnungswinkel kleiner, ab welchem die Umgebungslichterfassungseinheit 8 die Helligkeit der Umgebung 9 automatisch erfassen kann. Ferner ist eine Türbetätigungserkennungseinheit 33, beispielhaft magnetischer, induktiver oder kapazitiver Sensor oder dergleichen, an der Frontleiste 13 vorgesehen, welcher vorzugsweise näher an der Öffnungsseite als die Umgebungslichterfassungseinheit 8 vorgesehen ist, so dass die Türbetätigungserkennungseinheit 33 frühzeitig das Abheben der Tür 4 vom Gehäuse 2 erfasst und der Öffnungswinkel der Tür 4 kleiner ist, ab welchem die Umgebungslichterfassungseinheit 8 die Helligkeit der Umgebung 9 automatisch erfassen kann.

In einem Ausführungsbeispiel startet das Erfassen der Helligkeit der Umgebung mit der Umgebungslichterfassungseinheit 8 zeitversetzt zum Starten des Öffnens der Tür 3. Beispielweise startet das Erfassen zu einem Zeitpunkt der zwischen 0,5 Sekunden und 1,5 Sekunden, insbesondere zwischen 0,8 Sekunden und 1,2 Sekunden nach dem Starten des Öffnens der Tür 4 liegt.

Es ist darüber hinaus vorgesehen, dass mit dem Starten des Öffnens der Tür 4 automatisch die Beleuchtungsvorrichtung 31 aktiviert wird, wie dies bereits oben dargelegt wurde. Es ist in einem Ausführungsbeispiel dazu vorgesehen, dass mit dem Starten der Beleuchtungsvorrichtung 31 ein automatisches Einstellen eines Basis-Beleuchtungsszenarios des Aufnahmeraums 3 gestartet wird. Dies betrifft dann insbesondere ein Beleuchten des Aufnahmeraums 3 mit einer Basishelligkeit und/oder einer Basislichtfarbe. Wird dann ausgehend von der in Fig. 13 gezeigten Situation die Tür 4 weiter geöffnet und somit um ihre Schwenkachse A verschwenkt, wird dann der Zustand gemäß Fig. 14 als weiteres Beispiel erreicht. In diesem Zustand der Tür 4 ist eine Verschwenkposition erreicht, bei welcher ein Nutzer umfänglich in den Aufnahmeraum 3 blicken kann und diesen umfänglich einsehen kann.

Es ist vorgesehen, dass die Erfassung der Helligkeit der Umgebung 9 mit der Umgebungslichterfassungseinheit 8 des Haushaltskältegeräts 1 durchgeführt wird, wobei das Erfassen durch das Öffnen der Tür 4 automatisch startet. Es wird dann das Auswerten der erfassten Helligkeit der Umgebung 9, insbesondere mit einer Auswerteeinheit 37 durchgeführt. Diese Auswerteeinheit 37 des Haushaltskältegeräts 1 kann Bestandteil der Steuereinheit 32 sein. Abhängig von dieser Helligkeit der Umgebung wird ein End-Beleuchtungsszenario für den Aufnahmeraum 3 erzeugt. Das Beleuchten des Aufnahmeraum 3 wird dann mit dem End-Beleuchtungsszenario durchgeführt.

In einem Ausführungsbeispiel wird das Erfassen der Helligkeit der Umgebung 9 nur mit oder zeitlich nach dem Öffnen der Tür 4 ausgehend von dem geschlossenen Zustand der Tür 4 automatisch gestartet. Das Erfassen der Helligkeit der Umgebung 9 wird für eine Zeitdauer von maximal 2 Sekunden, insbesondere maximal 1 Sekunde, durchgeführt. Insbesondere erfolgt dieses Erfassen für eine Zeitdauer zwischen 0,5 Sekunden und 1,5 Sekunden, insbesondere für 1 Sekunde. Ausgehend von dem Zustand in Fig. 13, bei welchem das Erfassen gerade startet oder starten kann, bis zu dem Öffnungszustand der Tür 3, wie es beispielsweise in Fig. 14 gezeigt ist, vergeht in einem Ausführungsbeispiel insbesondere üblicherweise eine Zeitdauer, die größer oder gleich dieser Zeitdauer des Erfassungsvorgangs ist. Insbesondere ist diese Zeitdauer üblicherweise größer als diejenige Zeitdauer, die zum Erfassen der Helligkeit der Umgebung zugrundegelegt wird und zusätzlich derjenigen Zeitdauer, die bis zum Bestimmen und Einstellen des End-Beleuchtungsszenarios vergeht. Damit wird in vorteilhafter Weise erreicht, dass gerade bei einem Zustand, wie er in Fig. 14 gezeigt ist und bei welchem beispielhaft eine Türposition dargestellt ist, bei welcher ein Nutzer frontseitig umfänglich in den Aufnahmeraum 3 blicken kann und diesen umfänglich und ergonomisch auch einfach vollumfänglich betrachten kann, das End-Beleuchtungsszenario bereits begonnen wird, eingestellt zu werden oder bereits eingestellt ist. Das Erfassen der Umgebungshelligkeit und das Einstellen des End-Beleuchtungsszenarios nehmen daher in einem Ausführungsbeispiel eine gesamte Zeitdauer ein, die kleiner oder gleich ist, als die Zeitdauer, bis die Tür 4 eine beispielhafte Position erreicht hat, wie sie in Fig. 14 gezeigt ist, ausgehend von der geschlossenen Stellung gemäß Fig. 12.

In Fig. 15 ist in einem beispielhaften Diagramm die Helligkeit H des Lichts der Beleuchtungsvorrichtung 31 in Abhängigkeit von der Zeit gezeigt. Wie zu erkennen ist, ist kurze Zeit nach dem Öffnungsvorgang die Beleuchtungsvorrichtung 31 gestartet und leuchtet den Aufnahmeraum 3 mit einer Basishelligkeit, wie sie beim Basis-Beleuchtungsszenario vorgegeben ist, aus. Dies sind im Ausführungsbeispiel beispielsweise 25 Prozent der maximalen Helligkeit der Beleuchtungsvorrichtung 31. Während einer Zeitdauer von beispielsweise 1 Sekunde wird das Erfassen der Helligkeit der Umgebung 9 durchgeführt, wobei in diesem Erfassungszeitraum die Helligkeit der Beleuchtungsvorrichtung 31 unverändert bleibt. Insbesondere erfolgt das Starten des Erfassungsvorgangs um etwa 1 Sekunde nach dem Starten der Türöffnung. Ist dann das Erfassungsprocedere und das Erzeugen der End-Beleuchtungsvorrichtung abhängig von dieser erfassten Helligkeit abgeschlossen, beispielsweise innerhalb der genannten Zeitdauer, vorzugsweise innerhalb von 2 Sekunden, insbesondere innerhalb von maximal 1,5 Sekunden, insbesondere innerhalb von 1 Sekunde, wird dann das End-Beleuchtungsszenario eingestellt. Dabei wird, wie dies auch in dem Diagramm in Fig. 15 zu erkennen ist, die Basishelligkeit mit dem fest vorgegebenen prozentualen Helligkeitswert hier beispielsweise erhöht und auf einen Endhelligkeitswert, der dem End-Beleuchtungsszenario zugehörig ist, erhöht. Es kann hier beispielsweise eine Erhöhung auf 50 Prozent oder auf 75 Prozent oder auf 100 Prozent der maximalen Helligkeit der Beleuchtungsvorrichtung 31 eingestellt werden. Diese Änderung, insbesondere ein Dimmen, dauert in einem Ausführungsbeispiel eine Zeitdauer kleiner 2 Sekunden, insbesondere kleiner 1,5 Sekunden, insbesondere zwischen 0,5 Sekunden und 1,5 Sekunden. Daher ist nach Ablauf dieses spezifischen Zeitfensters hier beispielhaft nach etwa zwei Sekunden nach dem Beginn des Öffnens der Tür 4 die Endhelligkeit des End-Beleuchtungsszenarios eingestellt. Zusätzlich oder anstatt dazu kann auch noch eine entsprechende Einstellung der Lichtfarbe erfolgen. Somit kann auch hier eine Änderung der Lichtfarbe zwischen dem Basis-Beleuchtungsszenario und dem End-Beleuchtungsszenario erfolgen. Insbesondere wird daher ein sehr schnelles Verfahren bereitgestellt, bei welchem die Erfassung der Umgebungshelligkeit ausgehend von einem Triggerkriterium, nämlich dem Öffnen der Tür bis hin zum Einstellen des End-Beleuchtungsszenarios, sehr schnell erfolgt, insbesondere innerhalb eines Zeitintervalls kleiner oder gleich drei Sekunden, insbesondere kleiner oder gleich 2,5 Sekunden.

Vorteilhaft ist dieses Szenario insbesondere dann, wenn die Umgebungslichterfassungseinheit 8 bei geschlossener Tür abgeschattet verbaut ist und somit von der Tür 4 oder einem anderen Komponententeil, insbesondere Designplatte 12 (Fig. 2), verdeckt ist. Ist das Haushaltsgerät, insbesondere das Haushaltskältegerät 1, kein freistehendes Gerät, sondern beispielsweise ein Einbaugerät, so kann die Umgebungslichterfassungseinheit 8 im geschlossenen Zustand der Tür 4 auch von einer Möbelfrontplatte, die an der Tür 4 frontseitig angeordnet ist, abgeschattet sein, wenn die Tür 4 geschlossen ist. Durch diese verdeckten Bauweisen einer derartigen Umgebungslichterfassungseinheit 8, beziehungsweise eines Helligkeitserfassungssensors, ist dieser verbessert geschützt. Andererseits kann dadurch auch erreicht werden, dass nicht eine permanente Erfassung der Helligkeit der Umgebung durchgeführt wird. Dies hat auch Vorteile bezüglich der Betriebsweise des Helligkeitserfassungssensors und bezüglich der Langlebigkeit des Helligkeitserfassungssensors.

### Bezugszeichenliste

- 1: Haushaltsgerät
- 2: Gehäuse
- 3: Aufnahmeraum
- 4: Tür
- 4a: Tür
- 4b: Tür
- 4c: Türabschlussleiste
- 5: Behälter
- 6: Außengehäuse
- 7: Freiraum
- 8: Umgebungslichterfassungseinheit
- 9: Umgebung
- 10: Türblatt
- 11: Außenwand
- 12: Designplatte
- 13: Frontleiste
- 14: Sensorgehäuse
- 15: Rückseite
- 16: Schnappverbindung
- 17: Versteifungsstruktur
- 18: Sensorgehäuseteil
- 19: Sensorgehäuseteil
- 20: Innenraum
- 21: Platine
- 22: Helligkeitssensor
- 23: Feuchtigkeitssensor
- 24: Anordnung
- 25: Loch
- 26: Linse
- 26a: Außenseite
- 27: optisches Element
- 28: Schnappelement
- 29: Lichtleiter
- 30: Gesamtteil
- 31: Beleuchtungsvorrichtung
- 32: Steuereinheit
- 33: Türbetätigungserkennungseinheit
- 34: Frontleiste
- 35: Spalt
- 36: Kommunikationsschnittstelle
- 37: Auswerteeinheit
- x: Breitenrichtung
- y: Höhenrichtung
- z: Tiefenrichtung
- A: Längsachse

## Patentansprüche

1. Haushaltsgerät (1) mit einer Umgebungslichterfassungseinheit (8), die ein Sensorgehäuse (14) und einen Helligkeitssensor (22) aufweist, der die Helligkeit des Umgebungslichts des Haushaltsgeräts (1) detektiert, wobei der Helligkeitssensor (22) in dem Sensorgehäuse (14) angeordnet ist, wobei das Haushaltsgerät (1) ein Gehäuse (2) mit einer Frontleiste (13, 34) und eine an dem Gehäuse (2) angebundene Tür (4, 4a, 4b) aufweist, wobei die Umgebungslichterfassungseinheit (8, 8') an der Frontleiste (13, 34) oder an einer Türabschlussleiste (4c) der Tür (4, 4a, 4b) angeordnet ist, wobei die Frontleiste (13, 34) oder Türabschlussleiste (4c) ein Loch (25) aufweist, durch welches die Umgebungslichterfassungseinheit (8, 8') Umgebungslicht detektiert, wobei das Loch (25) im geschlossenen Zustand der Tür (4, 4a, 4b) zumindest abgeschattet ist, so dass Umgebungslicht allenfalls reduziert zum Loch (25) gelangt. **dadurch gekennzeichnet, dass** das Haushaltsgerät (1) ein Einbaugerät (1) ist und an einer Frontseite eines Türblatts (10) der Tür (4) eine separate Designplatte (12) angeordnet ist, wobei in Höhenrichtung (y) des Haushaltsgeräts (1) betrachtet das Loch (25) überlappend mit der Designplatte (12) angeordnet ist und in Tiefenrichtung (z) des Haushaltsgeräts (1) maximal ein Minimalabstand (d) zwischen dem Loch (25) und der Designplatte (12) gebildet ist, so dass das Loch (25) durch die Designplatte (12) zumindest abgeschattet ist.

2. Haushaltsgerät (1) nach Anspruch 1, **dadurch gekennzeichnet, dass** die Umgebungslichterfassungseinheit (8, 8') mit zumindest einer Schnappverbindung (16) an der Frontleiste (13, 34) oder Türabschlussleiste (4c) angeordnet ist.

3. Haushaltsgerät (1) nach einem der vorhergehenden Ansprüche, **dadurch gekennzeichnet, dass** das Haushaltgerät (1) zwei separate Türen (4a, 4b) aufweist, die in Breitenrichtung (x) des Haushaltsgeräts (1) nebeneinander angeordnet sind, wobei das Loch (25), insbesondere mittig, zwischen den beiden Türen (4a, 4b) an der Frontleiste (13, 34) ausgebildet ist.

4. Haushaltsgerät (1) nach einem der vorhergehenden Ansprüche, **dadurch gekennzeichnet, dass** das Haushaltsgerät (1) eine Türbetätigungserkennungseinheit (33) aufweist, mit welcher eine Betätigung der Tür (4) erfassbar ist, wobei abhängig von einer Türbetätigung der Helligkeitssensor (22) zum Erfassen der Umgebungshelligkeit aktivierbar ist.

5. Haushaltsgerät (1) nach einem der vorhergehenden Ansprüche, **dadurch gekennzeichnet, dass** die Umgebungslichterfassungseinheit (8) eine Linse (26) aufweist, mit welcher das auf das Sensorgehäuse (14) einfallende Umgebungslicht zum Helligkeitssensor (22) hin gebündelt ist.

6. Haushaltsgerät (1) nach Anspruch 5, **dadurch gekennzeichnet, dass** die Linse (26) eine zumindest einseitig konvex geformte Linse (26) ist und/oder der Helligkeitssensor (22) in einem Fokus der Linse (26) angeordnet ist.

7. Haushaltsgerät (1) nach Anspruch 5 oder 6, **dadurch gekennzeichnet, dass** die Linse (26) einstückig mit dem Sensorgehäuse (14) ausgebildet ist.

8. Haushaltsgerät (1) nach einem der vorhergehenden Ansprüche 5 bis 7, **dadurch gekennzeichnet, dass** das Sensorgehäuse (14) und die Linse (26) ein Spritzgussbauteil ist.

9. Haushaltsgerät (1) nach einem der vorhergehenden Ansprüche 5 bis 8, **dadurch gekennzeichnet, dass** die Linse (26) mit zumindest einer Außenseite zur Umgebung (9) hin freiliegend am Sensorgehäuse (14) angeordnet ist.

10. Haushaltsgerät (1) nach einem der vorhergehenden Ansprüche, **dadurch gekennzeichnet, dass** die Umgebungslichterfassungseinheit (8) einen Lichtleiter (29) aufweist, mit welchem das einfallende Umgebungslicht geleitet wird.

11. Haushaltsgerät (1) nach einem der vorhergehenden Ansprüche 5 bis 9 und nach Anspruch 10, **dadurch gekennzeichnet, dass** die Linse (26) und der Lichtleiter (29) miteinander gekoppelt sind, insbesondere die Linse (26) im Strahlengang des Umgebungslichts vor dem Lichtleiter (29) angeordnet ist, insbesondere die Linse (26) als ein Ende des Lichtleiters (29) einstückig mit dem Lichtleiter (29) ausgebildet ist.

12. Verfahren zum Betreiben eines Haushaltsgeräts (1) nach einem der vorhergehenden Ansprüche, aufweisend folgende Schritte:
- Öffnen einer Tür (4) des Haushaltsgeräts (1);
- automatisches Einstellen eines Basis-Beleuchtungsszenarios zum Beleuchten eines Aufnahmeraums (3) des Haushaltsgeräts (1), der durch das Öffnen der Tür (4) geöffnet wird, unabhängig von der Helligkeit in der Umgebung (9) des Haushaltsgeräts (1), wobei das Beleuchten des Aufnahmeraums (3) mit einer Beleuchtungsvorrichtung (31) des Haushaltsgeräts (1) durchgeführt wird;
- Erfassung der Helligkeit der Umgebung (9) des Haushaltsgeräts (1) mit einer Umgebungslichterfassungseinheit (8) des Haushaltsgeräts (1), wobei das Erfassen durch das Öffnen der Tür (4) automatisch startet, wobei das Erfassen mit einer vorgegebenen Zeitdauer versetzt nach dem Starten des Öffnens der Tür (4) startet, so dass die Tür (4) beim Erfassen der Helligkeit so weit geöffnet ist, dass die Umgebungslichterfassungseinheit (8) freiliegt;
- Auswerten der erfassten Helligkeit der Umgebung (9) mit einer Auswerteeinheit (37) des Haushaltsgeräts (1);
- Erzeugen eines End-Beleuchtungsszenarios für den Aufnahmeraum (6) abhängig von der erfassten Helligkeit;
- Beleuchten des Aufnahmeraums (6) mit dem End-Beleuchtungsszenario bei geöffneter Tür (4).

## Claims

1. Household appliance (1) with an ambient light sensing unit (8), which has a sensor housing (14) and a brightness sensor (22), which detects the brightness of the ambient light of the household appliance (1), wherein the brightness sensor (22) is arranged in the sensor housing (14), wherein the household appliance (1) has a housing (2) with a front strip (13, 34) and a door (4, 4a, 4b) connected to the housing (2), wherein the ambient light sensing unit (8, 8') is arranged on the front strip (13, 34) or on a door finishing strip (4c) of the door (4, 4a, 4b), wherein the front strip (13, 34) or door finishing strip (4c) has a hole (25), through which the ambient light sensing unit (8, 8') detects ambient light, wherein in the closed state of the door (4, 4a, 4b) the hole (25) is at least shaded so that ambient light reaches the hole (25) at best to a reduced extent, **characterised in that** the household appliance (1) is a built-in unit (1) and a separate design board (12) is arranged on a front side of a door leaf (10) of the door (4), wherein viewed in the height direction (y) of the household appliance (1), the hole (25) is arranged so as to overlap with the design board (12) and in the depth direction (z) of the household appliance (1) a minimal distance (d) between the hole (25) and the design board (12) is formed at most so that the hole (25) is at least shaded by the design board (12).

2. Household appliance (1) according to claim 1, **characterised in that** the ambient light sensing unit (8, 8') is arranged with at least one snap-fit connection (16) on the front strip (13, 34) or door finishing strip (4c).

3. Household appliance (1) according to one of the preceding claims, **characterised in that** the household appliance (1) has two separate doors (4a, 4b), which are arranged adjacent to one another in the width direction (x) of the household appliance (1), wherein the hole (25) is embodied in particular centrally between the two doors (4a, 4b) on the front strip (13, 34).

4. Household appliance (1) according to one of the preceding claims, **characterised in that** the household appliance (1) has a door actuation detection unit (33), with which actuation of the door (4) can be sensed, wherein the brightness sensor (22) can be activated in order to sense the ambient brightness as a function of a door actuation.

5. Household appliance (1) according to one of the preceding claims, **characterised in that** the ambient light sensing unit (8) has a lens (26), with which the ambient light incident on the sensor housing (14) is bundled towards the brightness sensor (22).

6. Household appliance (1) according to claim 5, **characterised in that** the lens (26) is a lens (26) which is convexly formed at least on one side and/or the brightness sensor (22) is arranged in a focus of the lens (26).

7. Household appliance (1) according to claim 5 or 6, **characterised in that** the lens (26) is embodied in one piece with the sensor housing (14).

8. Household appliance (1) according to one of the preceding claims 5 to 7, **characterised in that** the sensor housing (14) and the lens (26) is an injection moulded part.

9. Household appliance (1) according to one of the preceding claims 5 to 8, **characterised in that** the lens (26) is arranged in an exposed manner on the sensor housing (14) with at least one outer face towards the ambient (9).

10. Household appliance (1) according to one of the preceding claims, **characterised in that** the ambient light sensing unit (8) has a light conductor (29), with which the incident ambient light is routed.

11. Household appliance (1) according to one of the preceding claims 5 to 9, and according to claim 10, **characterised in that** the lens (26) and the light conductor (29) are coupled to one another, in particular the lens (26) is arranged upstream of the light conductor (29) in the beam path of the ambient light, in particular the lens (26) as an end of the light conductor (29) is embodied in one piece with the light conductor (29).

12. Method for operating a household appliance (1) according to one of the preceding claims, having the following steps:
- opening a door (4) of the household appliance (1),
- automatically adjusting a basic illumination scenario for illuminating a receiving space (3) of the household appliance (1), which is opened by the opening of the door (4),
independent of the brightness in the ambient (9) of the household appliance (1), wherein the receiving space (3) is illuminated with an illumination apparatus (31) of the household appliance (1);
- sensing the brightness of the ambient (9) of the household appliance (1) using an ambient light sensing unit (8) of the household appliance (1), wherein the sensing is started automatically by opening the door (4), wherein the sensing starts with a predefined time delay after the door (4) opening begins, so that when the brightness is sensed, the door (4) is opened so wide that the ambient light sensing unit (8) is exposed;
- evaluating the sensed brightness of the ambient (9) with an evaluation unit (37) of the household appliance (1);
- generating an end illumination scenario for the receiving space (6) as a function of the sensed brightness;
- illuminating the receiving space (6) with the end illumination scenario when the door (4) is open.

## Revendications

1. Appareil ménager (1) doté d'une unité de détection de lumière ambiante (8), laquelle comprend un boîtier de capteur (14) et un capteur de luminosité (22) configuré pour détecter la luminosité de la lumière ambiante de l'appareil ménager (1), dans lequel le capteur de luminosité (22) est disposé dans le boîtier de capteur (14), dans lequel l'appareil ménager (1) comprend un boîtier (2) avec une barre frontale (13, 34) et une porte (4, 4a, 4b) reliée au boîtier (2), dans lequel l'unité de détection de lumière ambiante (8, 8') est disposée sur la barre frontale (13, 34) ou sur une barre de finition de porte (4c) de la porte (4, 4a, 4b), dans lequel la barre frontale (13, 34) ou la barre de finition de porte (4c) comporte un orifice (25) à travers lequel l'unité de détection de lumière ambiante (8, 8') détecte la lumière ambiante, dans lequel l'orifice (25), lorsque la porte (4, 4a, 4b) est en position fermée, est au moins partiellement masqué, de sorte que la lumière ambiante n'atteint l'orifice (25) qu'au plus de manière réduite, **caractérisé en ce que** l'appareil ménager (1) est un appareil encastrable (1) et qu'une plaque décorative séparée (12) est disposée sur une face avant d'un panneau de porte (10) de la porte (4), dans lequel, considéré dans la direction de hauteur (y) de l'appareil ménager (1), l'orifice (25) est disposé en recouvrement avec la plaque décorative (12), et dans lequel, considéré dans la direction de profondeur (z) de l'appareil ménager (1), un écartement minimal (d) au plus est prévu entre l'orifice (25) et la plaque décorative (12), de sorte que l'orifice (25) est au moins partiellement masqué par la plaque décorative (12).

2. Appareil ménager (1) selon la revendication 1, **caractérisé en ce que** l'unité de détection de lumière ambiante (8, 8') est disposée sur la barre frontale (13, 34) ou sur la barre de finition de porte (4c) au moyen d'au moins une connexion par encliquetage (16).

3. Appareil ménager (1) selon l'une quelconque des revendications précédentes, **caractérisé en ce que** l'appareil ménager (1) comprend deux portes séparées (4a, 4b) disposées côte à côte dans la direction de largeur (x) de l'appareil ménager (1), dont l'orifice (25) est formé sur la barre frontale (13, 34), notamment de manière centrée, entre les deux portes (4a, 4b).

4. Appareil ménager (1) selon l'une quelconque des revendications précédentes, **caractérisé en ce que** l'appareil ménager (1) comprend une unité de détection d'actionnement de porte (33), au moyen de laquelle un actionnement de la porte (4) peut être détecté, et **en ce que**, en fonction dudit actionnement de porte, le capteur de luminosité (22) est activable pour détecter la luminosité ambiante.

5. Appareil ménager (1) selon l'une quelconque des revendications précédentes, **caractérisé en ce que** l'unité de détection de lumière ambiante (8) comprend une lentille (26) au moyen de laquelle la lumière ambiante incidente sur le boîtier de capteur (14) est focalisée en direction du capteur de luminosité (22).

6. Appareil ménager (1) selon la revendication 5, **caractérisé en ce que** la lentille (26) est une lentille convexe au moins sur un côté et/ou **en ce que** le capteur de luminosité (22) est disposé au foyer de la lentille (26).

7. Appareil ménager (1) selon la revendication 5 ou 6, **caractérisé en ce que** la lentille (26) est réalisée d'un seul tenant avec le boîtier du capteur (14).

8. Appareil ménager (1) selon l'une quelconque des revendications précédentes 5 à 7, **caractérisé en ce que** le boîtier du capteur (14) et la lentille (26) constituent une pièce moulée par injection.

9. Appareil ménager (1) selon l'une quelconque des revendications précédentes 5 à 8, **caractérisé en ce que** la lentille (26) est disposée sur le boîtier du capteur (14) avec au moins une face extérieure tournée vers l'environnement (9) laissée à l'air libre.

10. Appareil ménager (1) selon l'une quelconque des revendications précédentes, **caractérisé en ce que** l'unité de détection de lumière ambiante (8) comprend un guide lumineux (29) au moyen duquel la lumière ambiante incidente est guidée.

11. Appareil ménager (1) selon l'une quelconque des revendications précédentes 5 à 9 et selon la revendication 10, **caractérisé en ce que** la lentille (26) et le guide lumineux (29) sont couplés entre eux, en particulier **en ce que** la lentille (26) est disposée dans le trajet du rayonnement de la lumière ambiante en amont du guide lumineux (29), et en particulier **en ce que** la lentille (26) est réalisée d'un seul tenant avec le guide lumineux (29) en formant une extrémité de celui-ci.

12. Procédé de fonctionnement d'un appareil ménager (1) selon l'une quelconque des revendications précédentes, comprenant les étapes suivantes :
- ouverture d'une porte (4) de l'appareil ménager (1) ;
- réglage automatique d'un scénario d'éclairage de base pour l'éclairage d'un espace de réception (3) de l'appareil ménager (1), lequel espace est ouvert par l'ouverture de la porte (4), indépendamment de la luminosité de l'environnement (9) de l'appareil ménager (1), dans lequel l'éclairage de l'espace de réception (3) est réalisé au moyen d'un dispositif d'éclairage (31) de l'appareil ménager (1) ;
- détection de la luminosité de l'environnement (9) de l'appareil ménager (1) au moyen d'une unité de détection de lumière ambiante (8) de l'appareil ménager (1), dans laquelle la détection démarre automatiquement lors de l'ouverture de la porte (4), dans laquelle la détection commence avec un décalage temporel prédéfini après le début de l'ouverture de la porte (4), de sorte que la porte (4) est, lors de la détection de la luminosité, ouverte dans une mesure telle que l'unité de détection de lumière ambiante (8) est dégagée ;
- évaluation de la luminosité de l'environnement (9) détectée au moyen d'une unité d'évaluation (37) de l'appareil ménager (1) ;
- génération d'un scénario d'éclairage final pour l'espace de réception (6) en fonction de la luminosité détectée ;
- éclairage de l'espace de réception (6) selon le scénario d'éclairage final, porte (4) ouverte.
